# EUROPÄISCHE PATENTSCHRIFT

(11) **EP 1 544 009 B1**
(45) Veröffentlichungstag und Bekanntmachung des Hinweises auf die Patenterteilung: **21.07.2010**
(21) Anmeldenummer: 04030040.2
(22) Anmeldetag: 17.12.2004
(51) Int. Cl.: B60H 1/00

(54) **Ventilanordnung, insbesondere zur Einstellung der Heizmittel-/ Kühlmittelströmung in einem Kraftfahrzeug**
Valve arrangement, particularly for adjusting the flow of heating or cooling liquid in a motor vehicle
Arrangement de soupapes, en particulier pour régler l'écoulement de fluide de chauffage et de refroidissement d'un véhicule automobile

(30) Priorität: 17.12.2003 DE 10359293
(43) Veröffentlichungstag der Anmeldung: 22.06.2005
(73) Patentinhaber: J. Eberspächer GmbH & Co. KG, 73730 Esslingen (DE)
(72) Erfinder: Humburg, Michael, 73035 Göppingen (DE)
(74) Vertreter: Ruttensperger, Bernhard

(56) Entgegenhaltungen:
- DE-A1- 1 935 840
- DE-A1- 4 446 152
- DE-C1- 4 229 608
- FR-A- 2 713 361
- US-A- 5 979 778
- PATENT ABSTRACTS OF JAPAN Bd. 014, Nr. 575 (M-1062), 20. Dezember 1990 (1990-12-20) & JP 02 248787 A (TOKICO LTD), 4. Oktober 1990 (1990-10-04)

## Beschreibung

Die vorliegende Erfindung betrifft eine Ventilanordnung, insbesondere zur Einstellung der Heizmittel-/Kühlmittelströmung in einem Kraftfahrzeug, welche Ventilanordnung ein Ventilorgan umfasst, das in Abhängigkeit von einer zwischen einer ersten Leitung und einer zweiten Leitung vorherrschenden Druckdifferenz zwischen einer ersten Verbindungsstellung und einer zweiten Verbindungsstellung verstellbar ist.

Eine derartige Ventilanordnung bzw. ein Heizsystem, in welches eine derartige Ventilanordnung integriert ist, ist aus der DE 44 46 152 A1 bekannt. Bei diesem bekannten Heizsystem sind zwei Wärmequellen vorgesehen. Dies ist zum einen eine Brennkraftmaschine, die im Verbrennungsbetrieb Wärme erzeugt und diese auf ein flüssiges Medium, im Allgemeinen Wasser, überträgt. Weiterhin ist als zweite Wärmequelle ein Heizgerät vorhanden, das im Allgemeinen auch brennstoffbetrieben ist. Auch durch dieses Heizgerät kann Wärme auf das flüssige Medium übertragen werden. Die in dem flüssigem Medium transportierte Wärme kann dann in einem Wärmetauscher auf die in den Fahrzeuginnenraum einzuleitende Luft übertragen werden. Jedem der Wärme erzeugenden Systembereiche, also der Brennkraftmaschine und dem Zusatzheizgerät, ist jeweils eine Förderpumpe zugeordnet, um in verschiedenen Betriebsphasen dafür zu sorgen, dass das in einem Leitungssystem zirkulierende flüssige Medium in Strömung versetzt bzw. gehalten wird.

Bei derartigen Heizsystemen sind verschiedene Betriebsmodi möglich bzw. gewünscht. So wird beispielsweise bei Inbetriebnahme eines Fahrzeugs zunächst nur die zweite Wärmequelle, also das Zusatzheizgerät, betrieben, um im Vorwärmmodus das Fahrzeug vorzuwärmen. Dies bedeutet, dass der Wärmetauscher zunächst nur mit flüssigem Medium gespeist wird, das in der zusätzlichen Heizeinrichtung erwärmt worden ist. Da in dieser Betriebsphase der Druck in einer von dem zusätzlichen Heizgerät weg führenden Leitung höher ist, als der Druck in einer von der Brennkraftmaschine weg führenden Leitung, ist ein druckabhängig verstellbares Ventilorgan so gestellt, dass es die vorangehend angesprochene Zirkulation vom Zusatzheizgerät zum Wärmetauscher ermöglicht, eine Zirkulation durch die Brennkraftmaschine aber im Wesentlichen unterbindet und hier nur einen Minimalstrom zulässt. Diesem druckabhängig verstellbaren Ventilorgan ist ferner ein Formgedächtniselement zugeordnet, das temperaturabhängig auf das Ventilorgan einwirken kann. Solange das von der Brennkraftmaschine zu der Ventilanordnung strömende und im Rahmen des Minimalstroms diese auch überströmende flüssige Medium eine vergleichsweise niedrige Temperatur hat, belässt das Formgedächtniselement das Ventilorgan in seiner druckdifferenzenmäßig vorgegebenen Stellung, in welcher das Durchströmen der Brennkraftmaschine im Wesentlichen unterbunden ist. Steigt jedoch die Temperatur des von der Brennkraftmaschine zur Ventilanordnung strömenden flüssigen Mediums über die Schalttemperatur des Formgedächtniselements an, so beaufschlagt dieses das Ventilorgan entgegen der auf dieses einwirkenden Kraft, um auch die Durchströmung der Brennkraftmaschine über den Minimalstrom hinausgehend zuzulassen. In dieser Phase, in welcher die Brennkraftmaschine selbst noch nicht notwendigerweise in Betrieb gesetzt ist, durchströmt also das von der zusätzlichen Heizeinrichtung erwärmte flüssige Medium nicht nur den Wärmetauscher, sondern auch die Brennkraftmaschine und trägt somit zur Vorwärmung derselben bei. Fällt beim Durchströmen der Brennkraftmaschine die Temperatur des flüssigen Mediums wieder unter die Schalttemperatur des Formgedächtniselements ab, so hebt diese seine Beaufschlagungswirkung auf, und das Ventilorgan kehrt druckbedingt wieder in diejenige Stellung zurück, in welcher es die Durchströmung der Brennkraftmaschine mit dem flüssigen Medium im Wesentlichen unterbindet. Auf diese Art und Weise kann sichergestellt werden, dass ausreichend Wärme zur Übertragung auf die in den Fahrzeuginnenraum einzuleitende Luft bereitgestellt wird. Wird die Brennkraftmaschine dann in Betrieb gesetzt, wird im Allgemeinen auch die dieser zugeordnete Flüssigkeitsförderpumpe aktiviert, mit der Folge, dass der Druck des die Brennkraftmaschine durchströmenden flüssigen Mediums ansteigt und somit druckbedingt das Ventilorgan die Durchströmung der Brennkraftmaschine zulassen wird, selbst wenn die Temperatur des zu diesem Zeitpunkt durch die Brennkraftmaschine hindurchgeströmten flüssigen Mediums unter der Schalltemperatur des Formgedächtniselements ist.

Es ist die Aufgabe der vorliegenden Erfindung, eine Ventilanordnung, insbesondere zur Einstellung der Heizmittel-/Kühlmittelströmung in einem Kraftfahrzeug vorzusehen, mit welcher verbessert auf die Betriebsverhältnisse, insbesondere Temperaturverhältnisse, reagiert werden kann.

Erfindungsgemäß wird diese Aufgabe gelöst durch eine Ventilanordnung, insbesondere zur Einstellung der Heizmittel-/Kühlmittelströmung in einem Kraftfahrzeug, umfassend ein erstes Ventilorgan, das in Abhängigkeit von einer zwischen einer ersten Leitung und einer zweiten Leitung vorherrschenden Druckdifferenz zwischen einer ersten Verbindungsstellung und einer zweiten Verbindungsstellung verstellbar ist, so wie ein zweites Ventilorgan, das temperaturabhängig die Durchströmbarkeit des ersten Ventilorgans verändert.

Man erkennt, dass bel der erfindungsgemäßen Ventilanordnung zur definierten Einstellung der Strömungsverhältnisse zwei Ventilorgane vorgesehen sind, wobei im Wesentlichen eines der Ventilorgane druckabhängig verstellbar ist, während das andere der Ventilorgane temperaturabhängig verstellbar ist. Da bei den eingangs beschriebenen Systemen sowohl der Druck als auch die Temperatur für das Schalten der Ventilanordnung relevante Eingangrößen darstellen, kann auf diese Art und Weise eine optimierte Auslegung der Ventilanordnung hinsichtlich dieser beiden Schaltkriterien erlangt werden, wenn, wie die Erfindung dies vorsieht, zwei Ventilorgane vorgesehen sind, von welchen jedes auf einen der Eingangsparameter Druck bzw. Temperatur reagiert und eine entsprechende Schaltung der Strömungswege realisiert.

Der Aufbau der erfindungsgemäßen Ventilanordnung ist weiterhin derart, dass dann, wenn der Druck in der ersten Leitung höher ist, als der Druck in der zweiten Leitung, das erste Ventilorgan in der ersten Verbindungsstellung ist oder in die erste Verbindungsstellung bringbar ist, wobei bei in der ersten Stellung positioniertem ersten Ventilorgan das zweite Ventilorgan in Abhängigkeit von der Temperatur zwischen einer ersten Überbrückungsstellung, in welcher eine Strömungsverbindung zwischen der ersten Leitung und einer dritten Leitung vorgesehen ist, während zwischen der zweiten Leitung und der dritten Leitung keine oder eine Minimalströmungsverbindung vorgesehen ist, und einer zweiten Überbrückungsstellung verstellbar ist, in welcher eine Strömungsverbindung zwischen der zweiten Leitung und der dritten Leitung vorgesehen ist, während zwischen der ersten und der dritten Leitung keine Strömungsverbindung oder eine Minimalströmungsverbindung vorgesehen ist, und dann, wenn der Druck in der zweiten Leitung höher ist, als der Druck in der ersten Leitung, das erste Ventilorgan in der zweiten Verbindungsstellung ist oder in die zweite Verbindungsstellung bringbar ist, in welcher eine Strömungsverbindung zwischen der zweiten Leitung und der dritten Leitung vorgesehen ist.

Um insbesondere die temperaturabhängig vorzunehmende Umschaltbarkeit der Strömungswege vermittels des zweiten Ventilorgans bei kompakter Baugröße und einfachem Aufbau realisieren zu können, wird vorgeschlagen, dass in dem ersten Ventilorgan eine Ventilkammer gebildet ist, dass in dem ersten Ventilorgan eine erste Öffnungsanordnung vorgesehen ist, über welche die Ventilkammer in Verbindung mit einer ersten Leitung bringbar ist, eine zweite Öffnungsanordnung vorgesehen ist, über welche die Ventilkammer in Verbindung mit einer zweiten Leitung bringbar ist, und eine dritte Öffnungsanordnung vorgesehen ist, über welche die Ventilkammer in Verbindung mit einer dritten Leitung bringbar ist, wobei das zweite Ventilorgan in der ersten Überbrückungsstellung eine Strömungsverbindung von der ersten Öffnungsanordnung zur dritten Öffnungsanordnung über die Ventilkammer vorsieht, während über die zweite Öffnungsanordnung keine Strömungsverbindung oder eine Minimalströmungsverbindung zur Ventilkammer vorgesehen ist, und in der zweiten Überbrückungsstellung eine Strömungsverbindung von der zweiten Öffnungsanordnung zur dritten Öffnungsanordnung über die Ventilkammer vorsieht, während zumindest dann, wenn das erste Ventilorgan in einer ersten Verbindungsstellung ist, über die erste Öffnungsanordnung keine Strömungsverbindung oder eine Minimalströmungsverbindung zur Ventilkammer vorgesehen ist,

Die temperaturabhängige Verstellbarkeit des zweiten Ventilorgans ist durch eine Aktuatoranordnung realisiert, durch welche temperaturabhängig das zweite Ventilorgan zwischen einer ersten Überbrückungsstellung und einer zweiten Überbrückungsstellung verstellbar ist. Dabei kann beispielsweise vorgesehen sein, dass die Aktuatoranordnung ein temperaturabhängig wirksames Stellelement umfasst, durch welches das zweite Ventilorgan bezüglich des ersten Ventilorgans verstellbar ist. Eine aus Bauraumgründen besonders vorteilhafte Variante kann dabei vorsehen, dass das zweite Ventilorgan in der Ventilkammer des ersten Ventilorgans angeordnet ist und durch die Aktuatoranordnung in der Ventikammer verstellbar ist.

Um auch bei der temperaturabhängigen Verstellung des zweiten Ventilorgans durch das ihm zugeordnete Stellelement in Abhängigkeit von der Temperatur in einfacher Art und Weise definierte Lagen des zweiten Ventilorgans zu erhalten, wird vorgeschlagen, dass das zweite Ventilorgan durch das Stellelement temperaturabhängig gegen die Wirkung eines Rückstellelements verschiebbar ist.

Beispielsweise kann das Stellelement ein temperaturabhängig expandierendes/kontrahierendes Element sein, das durch seine Extraktion/Kontraktion eine Verschiebung des zweiten Ventilorgans bezüglich des ersten Ventilorgans auslöst. Hier kommen Bauteile aus Materialien zum Einsatz, die eine vergleichsweise starke thermische Abmessungsänderung erfahren.

Auch Formgedächtnismaterialien, die eine definierte Schalttemperatur zum Umschalten zwischen zwei vorgegebenen Zuständen aufweisen, können zum Einsatz gelangen.

Gemäß einer weiteren Variante kann bei der erfindungsgemäßen Ventilanordnung ein drittes Ventilorgan vorgesehen sein, das in Abhängigkeit von einer zwischen der ersten Leitung und der zweiten Leitung vorherrschenden Druckdifferenz die Durchströmbarkeit des zweiten Ventilorgans verändert. Dabei kann dann weiter vorgesehen sein, dass dann, wenn der Druck in der ersten Leitung höher ist, als der Druck in der zweiten Leitung, das dritte Ventilorgan das zweite Ventilorgan gegen Durchströmung sperrt, und dann, wenn der Druck in der zweiten Leitung höher ist, als der Druck in der ersten Leitung, das dritte Ventilorgan das zweite Ventilorgan zur Durchströmung freigibt. Auf diese Art und Weise wird erreicht, dass dann, wenn der Druck in der zweiten Leitung ansteigt bzw. höher wird, als der Druck in der ersten Leitung, das zweite Ventilorgan mit einem vergleichsweise geringen Strömungswiderstand durchströmbar ist.

Um insbesondere beim Einsatz in Kraftfahrzeugen die vorangehend geschilderten definierten Betriebszustände realisieren zu können, wird vorgeschlagen, dass bei niedrigerer Temperatur das zweite Ventilorgan in seiner ersten Überbrückungsstellung ist und dass bei höherer Temperatur das zweite Ventilorgan in seiner zweiten Überbrückungsstellung ist. Es sei hier darauf hingewiesen, dass die Ausdrücke "niedrigerer Temperatur" bzw. "höherer Temperatur" zum Ausdruck bringen sollen, dass temperaturabhängig verschiedene Stell- bzw. Schaltzustände eingenommen werden können. Bei welchen Temperaturen beispielsweise die erste Überbrückungsstellung bzw. die zweite Überbrückungsstellung dann eingenommen werden sollen, hängt selbstverständlich von dem jeweils zu realisierenden Gesamtsystem vor. Von Bedeutung ist für die vorliegende Erfindung, dass jedoch grundsätzlich verschiedene Temperaturniveaus auch verschiedene Stellungen insbesondere des zweiten Ventilorgans bewirken sollen bzw. bewirken werden.

Gemäß einem weiteren besonders vorteilhaften Aspekt der vorliegenden Erfindung kann vorgesehen sein, dass bei in der ersten Verbindungsstellung positioniertem ersten Ventilorgan und in der oder im Bereich der ersten Überbrückungsstellung positioniertem zweiten Ventilorgan das temperaturabhängig wirksame Stellelement im Wesentlichen in thermischem Kontakt mit im Bereich der ersten Leitung strömendem Fluid ist und dass bei in der ersten Verbindungsstellung positioniertem ersten Ventilorgan und in der oder im Bereich der zweiten Überbrückungsstellung positioniertem zweiten Ventilorgan das temperaturabhängig wirksame Stellelement im Wesentlichen in thermischem Kontakt mit im Bereich der zweiten Leitung strömendem Fluid ist. Auf diese Art und Weise kann erreicht werden, dass dann, wenn zunächst eine Strömungsverbindung zwischen der ersten und der dritten Leitung realisiert ist, auch das in diesem Bereich strömende Medium durch seinen Kontakt mit dem temperaturabhängig wirksamen Stellelement dessen Stellverhalten und somit die Stellung des zweiten Ventilorgans beeinflussen wird, während dann, wenn zwischen der zweiten und der dritten Leitung eine Strömungsverbindung realisiert ist, das in diesem Bereich strömende Fluid durch seinen Kontakt mit dem temperaturabhängig wirksamen Stellelement dessen Stellverhalten im Wesentlichen beeinflussen wird. Dadurch wird erlangt, dass immer dasjenige Fluid bzw. flüssige Medium, das momentan im Wesentlichen durch die Ventilanordnung strömt, thermisch sensiert wird und somit das Schaltverhalten bzw. die Schaltstellung insbesondere des zweiten Ventilorgans vorgeben kann. Somit kann sehr schnell auf Temperaturänderungen in dem die Ventilanordnung im Wesentlichen durchströmenden Fluid reagiert werden.

Gemäß einem weiteren Aspekt betrifft die vorliegende Erfindung ein Fahrzeugheizsystem, umfassend eine erste Wärmequelle, welche von einem Heizfluid zur Erwärmung desselben durchströmbar ist, wobei die erste Wärmequelle im Wesentlichen ein Fahrzeugantriebsaggregat umfasst, eine zweite Wärmequelle, welche zur Erwärmung des Heizfluids von diesem durchströmbar ist, wobei die zweite Wärmequelle im Wesentlichen ein Zusatzheizgerät umfasst, eine Wärmetauscheranordnung, welcher das von der ersten Wärmequelle oder/und von der zweiten Wärmequelle erwärmte Fluid zuführbar ist, eine erfindungsgemäße Ventilanordnung, welche bei zur Erwärmung des Heizfluids betriebener zweiter Wärmequelle eine Heizfluidströmung von der zweiten Wärmequelle zur Wärmetauscheranordnung und von der Wärmetauscheranordnung zur zweiten Wärmequelle ermöglicht, während eine Durchströmung der ersten Wärmequelle im Wesentlichen unterbunden ist, wenn die Temperatur des die zweite Wärmequelle verlassenden Heizfluids in einem niedrigeren Bereich ist, und welche bei zur Erwärmung des Heizfluids betriebener zweiter Wärmequelle eine Durchströmung der ersten Wärmequelle mit dem Heizfluid ermöglicht, wenn die Temperatur des die zweite Wärmequelle verlassenden Heizfluids in einem höheren Bereich ist.

Bei einem derartigen Heizsystem ist also dafür gesorgt, dass, so lange die Temperatur des die zweite Wärmequelle, also das Zusatzheizgerät, verlassenden Fluids nicht ausreichend hoch ist, eine Durchströmung der ersten Wärmequelle, also der Brennkraftmaschine unterbunden ist und somit eine weitere deutliche Abkühlung des Heizfluids verhindert wird. Erst dann, wenn das aus der ersten Wärmequelle austretende Heizfluid ausreichend warm ist und somit auch eine geeignete Erwärmung des Antriebsaggregats realisiert werden kann bzw. eine Überhitzung des Heizfluids auftreten könnte, wird auch die Durchströmung des Antriebsaggregagats freigegeben. Auf diese Art und Weise kann dann bei Durchströmung des Fahrzeugantriebaggregats Wärme an dieses abgegeben werden, so dass dieses einerseits vorerwärmt werden kann und andererseits eine Überhitzung des Heizfluids vermieden werden kann, ohne dass es erforderlich wäre, die Ansteuerung des Zusatzheizgeräts zu verändern, um beispielsweise dessen Heizleistung zu drosseln.

Erfindungsgemäß kann dabei weiter vorgesehen sein, dass die Ventilanordnung dann, wenn die Temperatur des die zweite Wärmequelle verlassenden Heizfluids in einem höheren Bereich ist und eine Durchströmung der ersten Wärmequelle mit dem Fluid ermöglicht ist, diese Durchströmung drosselt oder unterbindet, wenn die Temperatur des von der ersten Wärmequelle zur Ventilanordnung strömenden Heizfluids in einem niedrigeren Bereich ist. Durch diesen Aspekt wird sichergestellt, dass bei zu großem Wärmeverlust im Bereich des Fahrzeugantriebsaggregats die Durchströmung desselben wieder beendet bzw. zumindest gemindert wird, um eine ausreichende Wärmeabgabe im Wärmetauscher beispielsweise an die in den Fahrzeuginnenraum einzuleitende Luft sicherstellen zu können. Somit kann bei dem erfindungsgemäßen Fahrzeugheizsystem die Ventilanordnung eine Thermostatfunktion realisieren, die zumindest in einer Phase, in welcher das Fahrzeugantriebsaggregat noch nicht in Betrieb gesetzt ist und somit keinen Beitrag zur Erwärmung des Heizfluids liefern kann, eine Konstanthaltung des die Wärmetauscheranordnung durchströmenden und Wärme auf die in de Fahrzeuginnenraum einzuleitende Luft übertragenden Heizfluids zu gewährleisten.

Die vorliegende Erfindung wird nachfolgend mit Bezug auf die beiliegenden Zeichnungen anhand bevorzugter Ausgestaltungsformen detailliert beschrieben. Es zeigt:
- Fig. 1: eine schematische Ansicht eines Fahrzeugheizsystems, bei wel- chem die Erfindung realisiert sein kann;
- Fig. 2: eine Längsschnittansicht eines bei der erfindungsgemäßen Ventilanordnung einsetzbaren Ventilelements;
- Fig. 3: eine der Fig. 2 entsprechende Ansicht des Ventilelements in einer anderen Ventilstellung;
- Fig. 4: eine Schnittansicht der erfindungsgemäßen Ventilanordnung in einer ersten Ventilstellung;
- Fig. 5: eine der Fig. 4 entsprechende Ansicht der Ventilanordnung in einer zweiten Ventilstellung;
- Fig. 6: eine der Fig. 4 enstprechende Ansicht der Ventilanordnung in einer dritten Ventilstellung;
- Fig. 7: eine Längsschnittansicht eines Ventilelements gemäß einer alternativen Ausgestaltungsform;
- Fig. 8: das in Fig. 7 gezeigte Ventilelement in einer anderen Schaltstel- lung;
- Fig. 9: eine Teil-/Querschnittansicht des Ventilelements der Fig. 7, ge- schnitten längs einer Linie VIIII-VIIII in Fig. 7;
- Fig. 10: eine weitere der Fig. 7 entsprechende Ansicht des Ventilelements in einer anderen Schaltstellung;
- Fig. 11: eine Schnittansicht einer alternativen erfindungsgemäßen Ventil- anordnung in einer ersten Ventilstellung;
- Fig. 12: die Ventilanordnung der Fig. 11 in einer zweiten Ventilstellung;
- Fig. 13: die Ventilanordnung der Fig. 11 in einer dritten Ventilstellung.

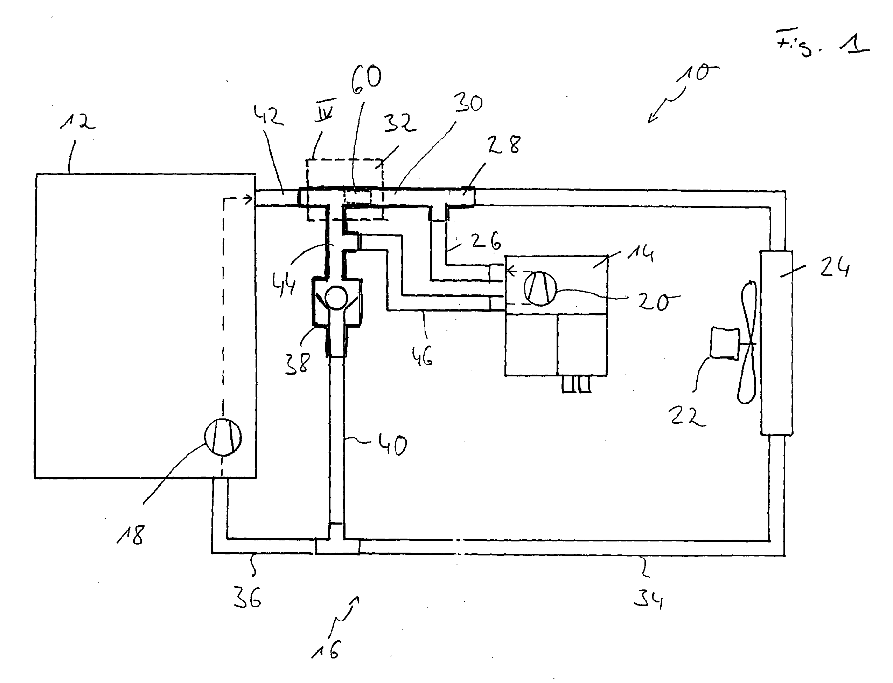

In Fig. 1 ist in prinzipieller Darstellung ein Fahrzeugheizsystem 10 gezeigt. Dieses Heizsystem 10 dient dazu, die in verschiedenen nachfolgend noch beschriebenen Systembereichen erzeugte Wärme einerseits von diesen Systembereichen abzuführen und andererseits zur Nutzung zur Erwärmung der in den Fahrzeuginnenraum einzuleitenden Luft oder zur anderweitigen Nutzung zur Verfügung zu stellen.

Das Heizsystem 10 umfasst als erste Wärmequelle ein beispielsweise als Brennkraftmaschine ausgebildetes Antriebsaggregat 12 und umfasst als zweite Wärmequelle ein Zusatzheizgerät 14, das als Standheizung oder insbesondere bei Turbodieselantriebsaggregaten als Zuheizer wirksam sein kann. Durch ein allgemein mit 16 bezeichnetes Leitungssystem zirkuliert ein im nachfolgenden als Heizfluid bezeichnetes flüssiges Medium, im Allgemeinen Wasser. Dieses Heizfluid kann durch zwei Pumpen 18, 20 zur Zirkulation im Leitungssystem 16 angetrieben werden. Die Pumpe 18 ist beispielsweise im Bereich des Antriebsaggregats 12 oder strömungstechnisch stromaufwärts davon angeordnet, während die Pumpe 20 im Heizgerät 14 oder strömungstechnisch stromaufwärts davon angeordnet sein kann. Diese beiden Pumpen 18, 20 stehen selbstverständlich unter der Ansteuerung einer Ansteuervorrichtung, ebenso wie verschiedene andere anzusteuernde Systembereiche, wie beispielsweise das Antriebsaggregat 12 oder ein Gebläse 22, das einem in das Leitungssystem 16 integrierten Wärmetauscher 24 zugeordnet ist, um bei Durchströmung des Wärmetauschers 24 mit erwärmtem Heizfluid diesen Wärmetauscher 24 mit Luft zu umströmen.

Das Leitungssystem 16 umfasst ausgehend von dem Heizgerät 14 einen Leitungsabschnitt 26, der in einen Leitungsabschnitt 26 übergeht. Dieser Leitungsabschnitt 28 führt zu dem Wärmetauscher 24. In demjenigen Bereich, in dem der Leitungsabschnitt 26 in den Leitungsabschnitt 28 übergeht oder in diesen einmündet, führt ein weiterer Leitungsabschnitt 30 zu einer nachfolgend detaillierter beschriebenen Ventilanordnung 32. Ein Leitungabschnitt 34 führt von dem Wärmetauscher 24 weg und teilt sich in einen zur Pumpe 18 bzw. zum Antriebsaggregat führenden Leitungsabschnitt 36 und einen zu einem Rückschlagventil 38 führenden Leitungsabschnitt 40 auf. Das durch die Pumpe 18 bzw. über den Leitungsabschnitt 36 in das Antriebsaggregat 12 eingeleitete Heizfluid verlässt das Antriebsaggregat 12 über einen Leitungsabschnitt 42 in Richtung zu der bereits angesprochenen Ventilanordnung 32. Zwischen dem bereits angesprochenen Rückschlagventil 38 und der Ventilanordnung 32 liegt ein weiterer Leitungsabschnitt 44, von dem ein Leitungsabschnitt 46 wegführt bzw. abgezweigt ist. Dieser Leitungsabschnitt 46 führt zurück zum Heizgerät 14.

Das Rückschlagventil 38 ist so in das Leitungssystem zwischen den Leitungsabschnitten 40 und 44 eingegliedert, dass bei entsprechendem Fluiddruck dieses vom Leitungsabschnitt 40 in den Leitungsabschnitt 44 gelangen kann, jedoch nicht vom Leitungsabschnitt 44 in den Leitungsabschnitt 40 eintreten kann.

Aus der vorangehenden Beschreibung erkennt man, dass die Ventilanordnung 32 grundsätzlich dazu vorgesehen ist, die drei Leitungsabschnitte 30, 42, 44 strömungsmäßig miteinander in Verbindung zu bringen, was nachfolgend noch detaillierter beschrieben wird. Im Sinne der vorliegenden Erfindung bildet dabei der Leitungsabschnitt 30 eine erste Leitung, der Leitungsabschnitt 40 bildet eine zweite Leitung und der Leitungsabschnitt 44 bildet eine dritte Leitung.

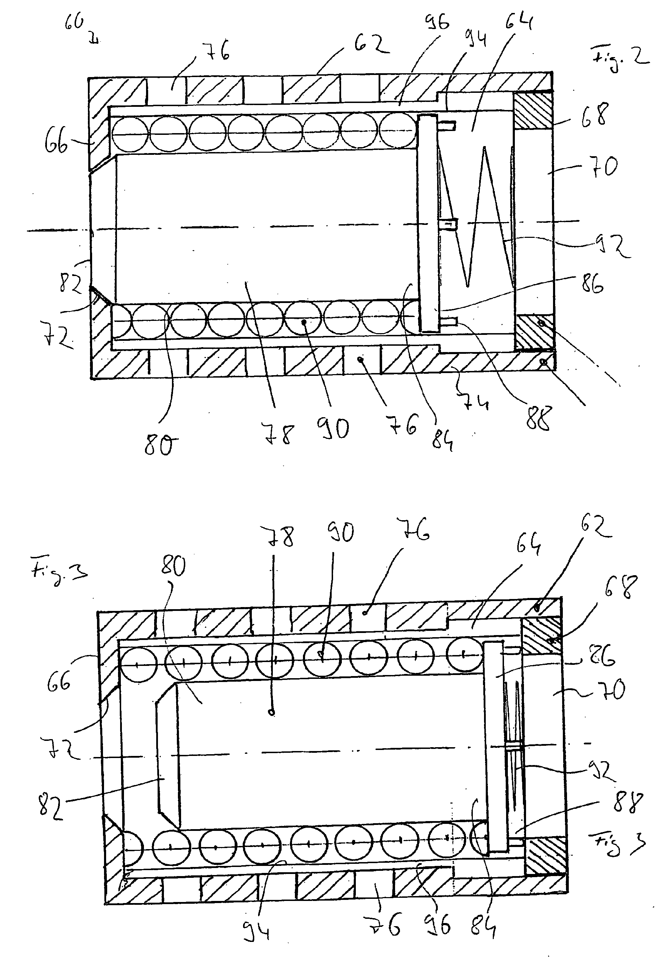

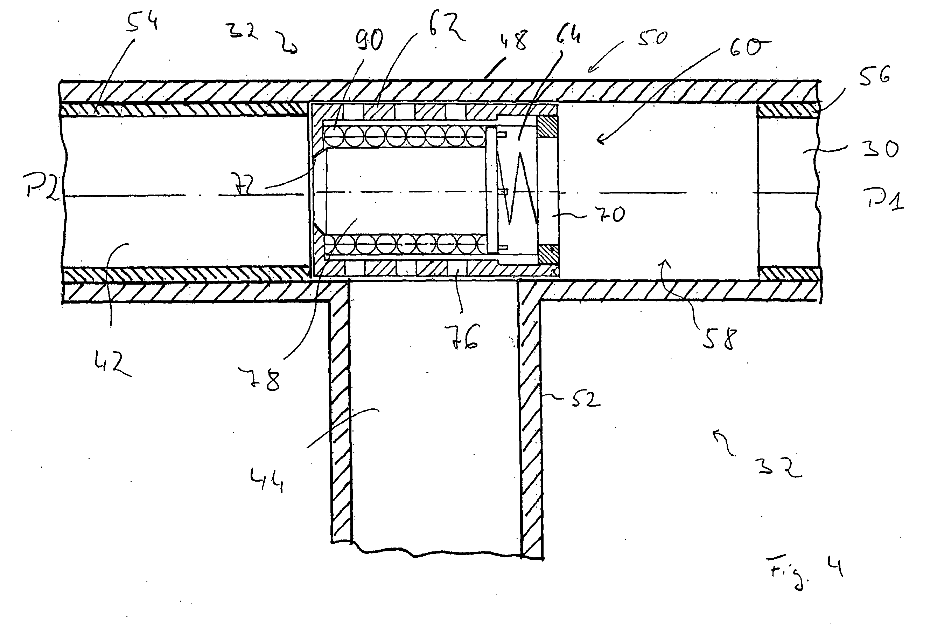

Die in Fig. 1 nur schematisch dargestellte Ventilanordnung wird nachfolgend mit Bezug auf die Figuren 2 bis 4 hinsichtlich ihres Aufbaus detaillierter erläutert. Dabei zeigt die Fig. 4 denjenigen Bereich, der in Fig. 1 in dem Kasten IV mit strichlierter Linie eingefasst ist.

Dabei erkennt man zunächst in Fig. 4, dass die beiden Leitungsabschnitte 30, 42, wie vorangehend bereits geschildert also die erste Leitung 30 und die zweite Leitung 42, in einem gemeinsamen Rohrabschnitt 48 ausgebildet sein können, der somit im Wesentlichen auch das Gehäuse 50 der Ventilanordnung 42 bereitstellt. Von diesem Rohrabschnitt 48 zweigt dann ein weiterer Rohrabschnitt 52 ab, der im Wesentlichen dann den Leitungsabschnitt 44 bereitstellt. In dem Rohrabschnitt 48 sind zwei hülsenartige Einsatzteile 54, 56 angeordnet, die in Längsrichtung des Rohrabschnitts 48 einen gegenseitigen Abstand aufweisen und somit einen Raumbereich 58 im Rohrabschnitt 48 definieren, in dem ein nachfolgend detaillierter beschriebenes Ventilelement 60 in der Längsrichtung des Rohrabschnitts 48 zwischen den beiden Einsätzen 54, 56, die als Bewegungsanschläge für das Ventilelement 60 wirken, hin- und herbewegbar ist. Dieses insbesondere in der Fig. 2 detaillierter erkennbare Ventilelement 60 umfasst ein zylinder- bzw. hülsenartig ausgestaltetes erstes Ventilorgan 62, das bei der vorangehend beschriebenen Hin- und Herbewegung im Wesentlichen als Ventilschieber wirksam ist. Im Innenraum dieses ersten Ventilorgans 62 ist eine Ventilkammer 64 gebildet. An den beiden in der Bewegungsrichtung gelegenen Enden ist dieses Ventilorgan 62 durch eine Bodenwandung 66 bzw. ein scheibenartiges Einsatzteil 68 begrenzt bzw. abgeschlossen. In dem Einsatzteil 68 ist eine Öffnung 70 ausgebildet, die zur Ventilkammer 64 hin offen ist und die, wie in der Fig. 4 erkennbar, im Wesentlichen zum Leitungsabschnitt 30 hin, also zur ersten Leitung hin, orientiert ist. In der Bodenwandung 66 ist eine weitere Öffnung 72 vorgesehen, die, wie ebenfalls in Fig. 4 erkennbar, bei entsprechender Positionierung des Ventilelements 60 im Wesentlichen zum Leitungsabschnitt 42 hin, also zur zweiten Leitung hin, offen ist. In der im Wesentlichen zylindrischen Umfangswandung 74 des ersten Ventilorgans 62 sind weiterhin mehrere Öffnungen 76 vorgesehen, über welche bei entsprechender Positionierung des Ventilelements 60, wie sie in Fig. 4 gezeigt ist, die Ventilkammer 64 in Richtung zum Leitungsabschnitt 44 hin offen ist. Diejenigen der Öffnungen 76, die nicht im Mündungsbereich des Rohrabschnitts 52 positioniert sind, sind im Wesentlichen durch den Rohrabschnitt 48 überdeckt und durch die vergleichsweise enge, jedoch eine Verschiebebewegung des ersten Ventilorgans 62 zulassende Passung des Ventilelements 60 in dem Rohrabschnitt 48 gegen Fluidaustritt im Wesentlichen abgeschlossen.

In der Ventilkammer 64 des ersten Ventilorgans 62 ist ein zweites Ventilorgan 78 aufgenommen. Dieses zweite Ventilorgan 78 ist im ersten Ventilorgan 62 in dessen Verschieberichtung, also in der Längsrichtung des Rohrabschnitts 48, bewegbar. Das Ventilorgan 78 weist einen in dieser Bewegungsrichtung langgestreckten Schaftbereich 80 auf, der im Bereich seines freien Endes 82 so ausgebildet ist, dass er bei entsprechender Positionierung die Öffnung 72 in der Bondewandung 66 abschließen kann. Hier kann beispielsweise sowohl im Bereich der Öffnung 72 als auch im Bereich des freien Endes 82 des Schaftbereichs 80 eine kegelstumpfartige Ausgestaltung gewählt werden. In seinem anderen Endbereich 84 ist das zweite Ventilorgan 78 mit einem radial vorspringenden Flanschbereich 86 ausgebildet. An diesem Flanschbereich 86 sind einerseits Abstandselemente 88 vorgesehen, die bei der in Fig. 3 erkennbaren Positionierung des zweiten Ventilorgans 78 in der Ventilkammer 64 dafür sorgen, dass der Flanschbereich 86 einen Abstand zu dem Einsatzteil 68 aufweist und somit die Öffnung 70 nicht vollständig abschließen kann. Auch bei der in Fig. 3 erkennbaren Positionierung ist somit eine Strömungsverbindung zwischen der Öffnung 70 und der Ventilkammer 64 realisiert, wobei dies in der in Fig. 3 erkennbaren Positionierung des zweiten Ventilorgans eine Minimalströmungsverbindung ist.

Den Schaftbereich 80 des zweiten Ventilorgans 78 umgebend ist in der Ventilkammer 64 ein Stellelement 90 vorgesehen. Dieses hier schraubenartig gewunden ausgestaltete Stellelement 90 ist thermisch aktiv, d.h., ändert temperaturabhängig seine Abmessung in der Bewegungsrichtung des zweiten Ventilorgans 78 im ersten Ventilorgan 62. Hier kann beispielsweise ein schraubenartig gewundenes Bauteil aus einem Formgedächtnismaterial eingesetzt werden, das unter einer bestimmten Schalttemperatur die in Fig. 2 erkennbare minimale Längenausdehnung aufweist und über dieser Schalttemperatur die in Fig. 3 dargestellte vergrößerte Längenausdehnung aufweist. Durch Veränderung der Temperatur im Bereich dieses Stellelements 90 kann also das zweite Ventilorgan 78 in der Ventilkammer 64 verschoben werden, wobei diese Verschiebung bei Erhöhung der Temperatur entgegen der Rückstellwirkung einer Vorspannfeder 92 erfolgt. Diese stützt sich am ersten Ventilorgan 62 im Bereich des Einsatzteils, 68 einerseits und am zweiten Ventilorgan 78 im Bereich des Endbereichs 84 desselben andererseits ab. Eine Temperaturabnahme im Bereich des Stellorgans, die eine entsprechende Kontraktion desselben bewirkt, hat dann zur Folge, dass das zweite Ventilorgan 78 der Vorspannwirkung der Rückstellfeder 92 folgend von der in Fig. 3 erkennbaren Positionierung in die in Fig. 2 erkennbare Positionierung gelangt, in welcher die Öffnung 72 im Wesentlichen vollständig abgeschlossen ist.

Man erkennt in den Fig. 2 und 3 weiter, dass an der Innenseite der zylindrischen Wandung 64 des ersten Ventilorgans 62 mehrere in der Längsrichtung dieses Ventilorgans 62 sich erstreckende rippenartige Vorsprünge 94 vorgesehen sind. Zwischen den in Umfangsrichtung aufeinander folgenden Vorsprüngen 94 sind Strömungsaussparungen 96 gebildet. Durch diese Vorsprünge 94 wird einerseits eine definierte Führung des zweiten Ventilorgans 78 bzw. des Stellelements 90 in dem ersten Ventilorgan 62 gewährleistet. Andererseits hat das Bereitstellen der Aussparungen 96 zur Folge, dass die Öffnungen 76, je nach Positionierung des zweiten Ventilorgans 78 über die Ventilkammer 64 in Strömungsverbindung mit der Öffnung 70 bzw. der Öffnung 72 stehen können.

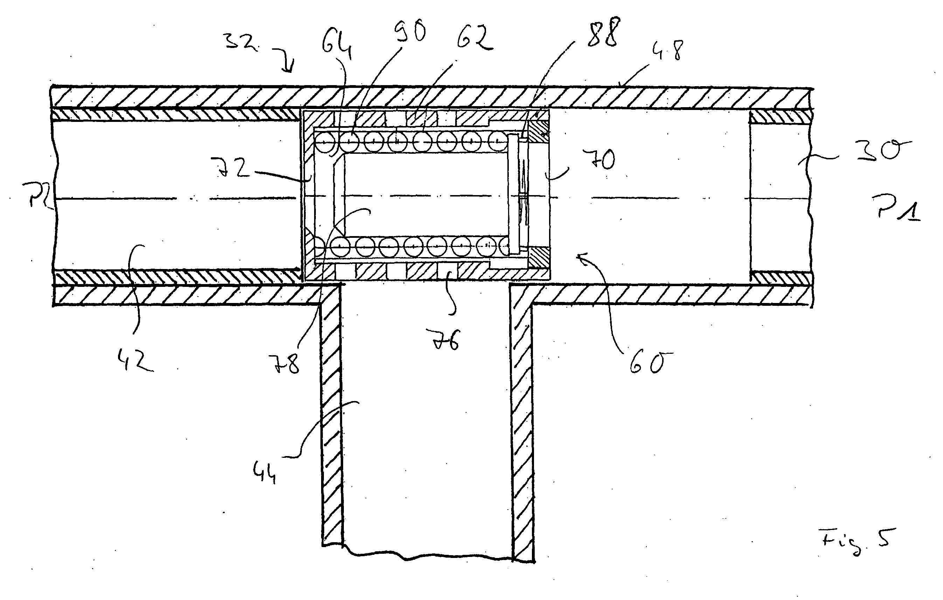

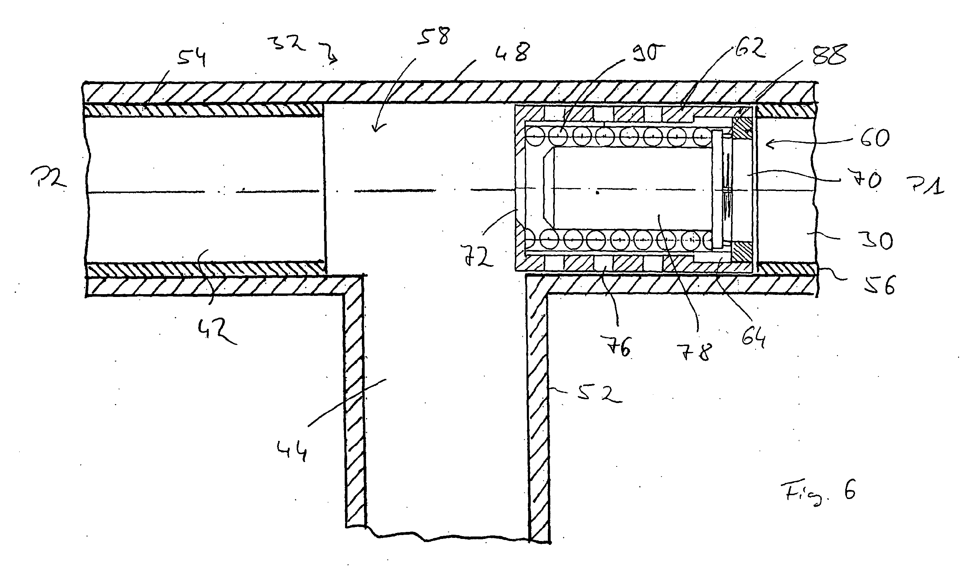

Nachfolgend wird auch unter weitergehende Bezugnahme auf die Figuren 5 und 6 die Funktionsweise der vorangehend detailliert beschriebenen Ventilanordnung 32 bei Eingliederung derselben in das Heizsystem 10 der Fig. 1 beschrieben.

Es sei zunächst angenommen, dass das Heizsystem 10 im Kaltzustand in Betrieb gesetzt werden soll und zwar dadurch, dass das Heizgerät 14 zum Vorkonditionieren eines Fahrzeugs aktiviert wird. D.h., durch im Heizgerät 14 ablaufende Verbrennung wird Wärme erzeugt, und durch Betreiben der Pumpe 20 wird das Heizfluid durch das Heizgerät 14 geleitet und dabei erwärmt. Dabei strömt das Heizfluid in der in Fig. 1 beim Heizgerät 14 eingezeichneten Strömungsrichtung. In diesem Zustand, in dem das Antriebsaggregat 12 noch nicht betrieben werden soll, bleibt die Pumpe 18 außer Betrieb. Das Heizfluid, das in dem Heizgerät 14 Wärme aufgenommen hat, strömt also zunächst in den Leitungsabschnitt 26 und von diesem in Richtung zu den Leitungsabschnitten 28, 30. Dabei wird, wie in Fig. 4 veranschaulicht, im Leitungsabschnitt 30 ein Druck P1 aufgebaut. Dieser Druck P1 ist zunächst größer, als der im Leitungsabschnitt 42 vorherrschende Druck P2, da durch die Pumpe 18 kein Fluid in Richtung Leitungsabschnitt 42 gefördert wird. Dies hat zur Folge, dass durch die Druckdifferenz P1-P2 das Ventilelement 60 in dem Raumbereich 58 so verschoben wird, dass es in die in Fig. 4 erkennbare erste Verbindungsstellung gelangt. In dieser ersten Verbindungsstellung ist die Leitungsverbindung zwischen den beiden Leitungsabschnitten 42, 44. zunächst unterbrochen, während über die Öffnung 70 über die Ventilkammer 64 und die zum Leitungsabschnitt 44 hin frei liegenden Öffnungen 76 der Leitungsabschnitt 30 in Strömungsverbindung mit dem Leitungsabschnitt 44 steht. Da weiterhin zu diesem Zeitpunkt das geförderte Heizfluid eine vergleichsweise niedrige Temperatur aufweisen wird, wird das Stellelement 90 sich zusammenziehen bzw. seinen zusammengezogenen Zustand beibehalten, so dass das zweite Ventilorgan 78, wie in Fig. 4 erkennbar, den Strömungsweg zwischen den beiden Leitungsabschnitten 30, 44 freigibt, d.h. beispielsweise in maximal möglichem Ausmaß freigibt. In diesem Zustand strömt also das von der Pumpe 20 in den Leitungsabschnitt 26 geförderte Heizfluid einerseits über den Leitungsabschnitt 28 zum Wärmetauscher 24 und andererseits über den Leitungsabschnitt 30 und die Ventilanordnung 32 in den Leitungsabschnitt 44. Das in den Leitungsabschnitt 44 geförderte Heizfluid kann auf Grund der Wirkung des Rückschlagventils 38 nicht in den Leitungsabschnitt 40 eintreten und wird somit über den Leitungsabschnitt 46 zum Heizgerät 14 zurückgefördert. Das in Richtung zum Wärmetauscher 24 geförderte Heizfluid tritt nach Durchströmen des Wärmetauschers 24 in den Leitungsabschnitt 34 ein. Da in diesem Zustand der Leitungsabschnitt 42 durch das Ventilelement 60 im Wesentlichen vollständig gegen Durchströmung abgeschlossen ist, kann das den Wärmetauscher 24 über den Leitungsabschnitt 34 verlassende Heizfluid nicht über den Leitungsabschnitt 36 in das Antriebsaggregat 12 gelangen. Vielmehr wird dieses Fluid in den Leitungsabschnitt 40 eintreten, über das Rückschlagventil 38 in den Leitungsabschnitt 44 gelangen und sich dort mit dem aus der Ventilanordnung 32 in den Leitungsabschnitt 44 eintretenden Heizfluid vermischen und über den Leitungsabschnitt 46 zum Heizgerät 14 zurückströmen.

In der Anfangsphase, in welcher das in dem vorangehend beschriebenen "kleinen" Kreislauf zirkulierende Heizfluid noch eine vergleichsweise niedrige Temperatur haben wird, ist, bedingt durch die Kontraktion des Stellorgans 90, das zweite Ventilorgan 68 in einer ersten Überbrückungsstellung, die in Fig. 4 erkennbar ist. Wie bereits ausgeführt, wird in der ersten Überbrückungsstellung die Öffnung 72, die ansonsten in Richtung zum Leitungsabschnitt 42 hin offen wäre, abgeschlossen, und zwar vorzugsweise vollständig abgeschlossen, während das Ventilelement 60 eine Überbrückung zwischen den beiden Leitungsabschnitten 30 und 44 realisiert. In diesem Zustand durchströmt das Heizfluid auch die Ventilkammer 64, so dass insbesondere durch Bereitstellung der in den Figuren 2 und 3 erkennbaren Aussparungen 96 auch das Stellelement 90 in Kontakt mit diesem Heizfluid kommen wird und somit dessen Temperatur sensieren wird.

Nimmt nach einiger Betriebszeit durch kontinuierliche Wärmeaufnahme die Temperatur des zirkulierenden Heizfluids zu, so wird dies das Stellelement 90 durch seinen vorangehend beschriebenen thermischen Kontakt mit dem zirkulierenden Fluid erfassen. Eine Temperaturzunahme hat zur Folge, dass das Stellelement 90 seine Längenabmessung ändern wird und das zweite Ventilorgan 78 mit einer Kraft beaufschlagen wird, die die Rückstellkraft der Feder 92 überkompensiert. Dies hat zur Folge, dass mit ansteigender Temperatur das zweite Ventilorgan 78 im ersten Ventilorgan 62 aus der in Fig. 4 erkennbaren ersten Überbrückungsstellung in Richtung zu einer in Fig. 5 erkennbaren zweiten Überbrückungsstellung verschoben wird. Dieser Übergang kann spontan erfolgen, also insbesondere bei Einsatz eines Formgedächtnislementes dann erfolgen, wenn die Schalttemperatur dieses Stellelements 90 überschritten wird. Grundsätzlich ist es auch möglich, dass auf Grund der Tatsache, dass nicht alle Bereiche des Stellelements 90 gleichermaßen mit dem zirkulierenden Heizfluid umströmt werden, zunächst diejenigen Bereiche einen Temperaturanstieg erfahren bzw. sensieren werden, die stärker in thermischem Kontakt mit dem Heizfluid stehen. D.h., es kann auch nur eine lokale Längenzunahme des Stellelements 90 erfolgen, so dass dieses nicht digital zwischen dem ersten Überbrückungzustand der Fig. 4 und dem zweiten Überbrückungszustand der Fig. 5 umschaltet, sondern mit einer allmählich ansteigenden Temperatur das zweite Ventilorgan 78 auch allmählich zunhemend in Richtung zur zweiten Überbrückungsstellung verschoben wird.

Bei diesem Übergang in die zweite Überbrückungsstellung wird spontan oder allmählich zunehmend die Öffnung 72 im ersten Ventilorgan 62 freigegeben, während der Strömungsweg von der Öffnung 70 zu den Öffnungen 76 allmählich gedrosselt wird. Bei Positionierung des zweiten Ventilorgans 78 in dem in Fig. 5 erkennbaren zweiten Überbrückungszustand ist dann eine Strömungsverbindung zwischen dem Leitungsabschnitt 42 und dem Leitungsabschnitt 44 über die Öffnung 72, die Ventilkammer 74 und die Öffnungen 76 in maximalem Ausmaß realisiert, während über die Öffnung 70 zu den Öffnungen 76 auf Grund der Abstandshalter 88 eine im Vergleich zu dem Zustand der Fig. 4 gedrosselte Minimalströmung möglich ist.

In dem in Fig. 5 erkennbaren zweiten Überbrückungszustand des zweiten Ventilorgans 78 ist nunmehr also der Strömungsweg vom Leitungsabschnitt 42 zum Leitungsabschnitt 44 freigegeben. Die Folge davon ist, dass auch bei noch nicht betriebener Pumpe 18 und in Folge der nach wie vor unveränderten Druckverhältnisse P1, P2 das Ventilelement 60 grundsätzlich in seiner ersten Verbindungsstellung verbleibt, trotzdem aber nunmehr eine Durchströmung des Antriebsaggregats 12 möglich ist. D.h., das von dem Wärmetauscher 24 unter der Förderwirkung der Pumpe 20 in den Leitungsabschnitt 34 geförderte Heizfluid wird nunmehr auch in den Leitungsabschnitt 36 eintreten können und nach Durchströmen des Antriebsaggregats über den Leitungsabschnitt 42 im Wesentlichen in den Leitungsabschnitt 44 eintreten können. Somit wird im Leitungsabschnitt 44 ein Druck aufgebaut, der das Öffnen des Rückschlagventils 38 erschwert, so dass im Wesentlichen kein Fluid mehr in den Leitungsabschnitt 40 und von dort in den Leitungsabschnitt 44 strömen wird.

In diesem Betriebszustand, in dem also das von dem Heizgerät 14 in den Leitungsabschnitt 26 und von diesem in die Leitungsabschnitte 28, 30 abgegebene Heizfluid eine bestimmte höhere Temperatur erreicht hat, wird Wärme nicht nur im Bereich des Wärmetauschers 24 abgegeben, sondern es wird zusätzlich auch Wärme im Bereich des Antriebsaggregats 12 abgegeben, so dass dieses vorerwärmt werden kann. In diesem Betriebszustand, in dem das erste Ventilorgan 62 in seiner ersten Ventilstellung ist und das zweite Ventilorgan 78 in seiner zweiten Überbrückungsstellung ist. Auf Grund der Tatsache, dass der Druck P1 auch in dieser Phase größer sein wird, als der Druck P2, wird nunmehr ein Teil des Heizfluids über den Leitungsabschnitt 30 in die Ventilkammer 64 eintreten. Auf Grund der Tatsache, dass die Öffnungen 76 einen größeren Strömungswiderstand darstellen, als die Öffnung 72, wird der größere Teil dieses Fluidanteils in den Leitungsabschnitt 42 eintreten und nunmehr das Antriebsaggregat 12 durchströmen, und zwar in einer Strömungsrichtung, die der unter Förderwirkung der Pumpe 18 an sich vorhandenen Strömungsrichtung entgegengesetzt ist. Dieser Heizfluidanteil wird sich, nachdem er in den Leitungsabschnitt 36 eingetreten ist, mit dem aus dem Leitungsabschnitt 34 heranströmenden Heizfluidanteil vereinigen und über den Leitungsabschnitt 40 und das Rückschlagventil 38 zurückströmen.

Da in diesem Zustand nach wie vor das Heizgerät 14 die einzige Wärmequelle ist, kann nunmehr der Fall auftreten, dass durch zusätzliche Wärmeabgabe im Bereich des Antriebsaggregats 12 das in den Leitungsabschnitt 42 gelangende Heizfluid eine Temperatur aufweist, die beispielsweise unter der Schalttemperatur des aus Formgedächtnismaterial aufgebauten Stellelements 90 liegt, bzw. die eine Kontraktion des diese Temperatur nunmehr sensierenden Stellelements 90 zur Folge haben wird. Daraus resultiert durch die Kontraktion des Stellelements 90, dass das zweite Ventilorgan 78 sich nunmehr der Vorspannwirkung der Feder 92 folgend zurück in Richtung zur ersten Überbrückungsstellung bewegen wird. Dieser Übergang kann wieder spontan auftreten, kann aber vor allem dann, wenn das Stellelement 90 nicht in seinem gesamten Längenbereich gleichmäßig in Kontakt mit dem sensierten Heizfluid ist, auch allmählich stattfinden, da nur gewisse Bereiche des Stellelements 90 sich zunächst zusammenziehen werden.

Die Folge dieses Zurückverstellens des zweiten Ventilorgans 78 in seine erste Überbrückungsstellung ist, dass nunmehr der Strömungsweg über das Antriebsaggregat 12 wieder abgesperrt bzw. zumindest gedrosselt wird, so dass ein größerer Anteil des Heizfluids wieder unter Auslassung des Antriebsaggregats über den Leitungsabschnitt 40 direkt zum Heizgerät 14 zurückströmen wird.

Man erkennt aus der vorangehenden Beschreibung, dass in dieser Phase, in welcher das Heizgerät 14 im Wesentlichen die einzige Wärmequelle bildet, die Ventilanordnung 32 eine Thermostatfunktion erfüllt, obgleich, bedingt durch die Druckverhältnisse, das erste Ventilorgan 62 in seiner ersten Verbindungsstellung verbleibt. Es kann somit sichergestellt werden, dass das über den Wärmetauscher 24 zirkulierende Heizfluid eine näherungsweise gleichbleibende Temperatur beibehält, da es bei übermäßiger Erwärmung einen zusätzlichen Wärmeanteil im Antriebsaggreggat 12 abgeben kann, bei unter eine bestimmte Grenze fallender Temperatur jedoch eine zur übermäßigen Abkühlung führende Wärmeabgabe im Antriebsaggregat vermieden bzw. zumindest gemindert wird. Letztendlich kann bei entsprechender Auswahl des Stellelements 90 dafür gesorgt werden, dass temperaturabhängig das zweite Stellorgan einen Gleichgewichtszustand zwischen der ersten Überbrückungsstellung und der zweiten Überbrückungsstellung einnehmen kann, so dass bei Betreiben des Heizgeräts 14 mit einer vorbestimmten Heizleistung immer so viel Heizfluid über das Antriebsaggregat 12 strömen und dort Wärme abgeben kann, wie dies erforderlich ist, um die Temperatur des zirkulierenden Heizfluids auf einem gewünschten Niveau zu halten. Bei einem stark ausgeprägten Schaltverhalten wird dieser Zustand eines gewünschten Temperaturniveaus bei dem zirkulierenden Heizfluid durch alternierendes Zu- bzw. Abschalten des Strömungswegs über das Antriebsaggregat 12 erlangt.

Wird das Antriebsaggregat 12 in Betrieb genommen, so wird im Allgemeinen auch die Pumpe 18 aktiviert, um auf diese Art und Weise für eine ausreichende Wärmeabfuhr der im Betrieb des Antriebsaggregats 12 dort entstehenden Wärme durch entsprechende Durchströmung vermittels des hier als Kühlmittel wirksamen Heizfluids zu sorgen. Dies hat zur Folge, dass ein Betriebszustand auftreten wird oder auftreten kann, in dem gleichzeitig die beiden Pumpen 18 und 20 betrieben werden und gleichzeitig auch im Bereich des Antriebsaggregats 12 als erste Wärmequelle und des Heizgeräts 14 als zweite Wärmequelle Wärmeenergie zur Übertragung auf das im Leitungssystem 16 zirkulierende Heizfluid bereitgestellt wird. Das Fördervermögen der beiden Pumpen 18, 20 bzw. auch die Leitungsquerschnitte sind bei dem System 10 so aufeinander abgestimmt, dass auch dann, wenn die Pumpe 20 betrieben wird und im Leitungsabschnitt 30 somit ein entsprechend hoher Druck P1 generiert wird, der durch Betreiben der Pumpe 18 im Leitungsabschnitt 42 bereitgestellte Druck P2 den Druck P1 überwiegt. Die Folge davon ist, dass nunmehr das erste Ventilorgan 62 mit dem darin aufgenommenen zweiten Ventilorgan 78, also das gesamte Ventilelelement 60, aus seiner in den Figuren 4 und 5 erkennbaren ersten Verbindungsstellung in eine in der Fig. 6 erkennbare zweite Verbindungsstellung verschoben wird. In dieser zweiten Verbindungsstellung überdeckt das erste Ventilorgan 62 die Einmündung des Rohrabschnitts 52 in den Rohrabschnitt 48 praktisch nicht mehr, so dass nunmehr eine Strömungsverbindung zwischen dem Leitungsabschnitt 42 und dem Leitungsabschnitt 44 bereitgestellt ist. Das unter der Förderwirkung der Pumpe 18 und auch ggf. der Förderwirkung der Pumpe 20 über den Leitungsabschnitt 20 zum Wärmetauscher 24 und von diesem in den Leitungsabschnitt 34 geförderte Heizfluid strömt nunmehr auch durch die Saugwirkung der Pumpe 18 über den Leitungsabschnitt 36, durch das Antriebsaggregat 12 hindurch und in den Leitungsabschnitt 42. Ist das Antriebsaggregat 12 eben erst in Betrieb genommen worden, so kann in dieser Phase durch das im Heizgerät 14 erwärmte Heizfluid noch Wärme auf das Antriebsaggregat 12 übertragen werden. Ist das Antriebsaggregat bereits länger in Betrieb, so wird die dort dann anfallende Wärme auf das Heizfluid übertragen und vom Antriebsaggregat 12 abgeführt.

Das in den Leitungsabschnitt 42 geförderte Heizfluid strömt dann in den Leitungsabschnitt 44 und von diesem auf Grund der Sperrwirkung des Rückschlagventils 38 in den Leitungsabschnitt 46. Vom Leitungsabschnitt 46 strömt dieses Heizfluid dann durch die Pumpe 20 des Heizgeräts 14 in den Leitungsabschnitt 26 und von diesem erneut über den Leitungsabschnitt 28 zum Wärmetauscher 24.

Da in dieser Phase das Heizfluid im Allgemeinen eine höhere Temperatur aufweisen wird, ist davon auszugehen, dass das zweite Ventilorgan in seiner zweiten Überbrückungsstellung ist, in welcher die Öffnung 72 freigegeben ist und auf Grund des Vorhandenseins der Abstandshalter 88 auch die Öffnung 70 nicht vollständig abgeschlossen ist. D.h., zumindest ein Teil des über den Leitungsabschnitt 42 herangeförderten Heizfluids durchströmt das erste Ventilorgan 62 bzw. das Ventilelement 60 und gelangt auf diese Art und Weise, ohne über das Heizgerät 14 geströmt zu sein, in den Leitungsabschnitt 30 und den Leitungsabschnitt 28. Auf diese Art und Weise kann der Gesamtströmungswiderstand des Leitungssystems 16 reduziert werden. Dies ist vor allem dann von Bedeutung, wenn beispielsweise auf Grund nicht mehr erforderlichen Betriebs des Heizgeräts 14 auch die diesem zugeordnete Pumpe 20 nicht mehr betrieben wird und somit das unter der Förderwirkung der Pumpe 18 dann noch zirkulierende Heizfluid zwar über die Leitungsabschnitte 44, 46 in das Heizgerät 14 bzw. die Pumpe 20 gefördert wird, diese Pumpe 20 aber nur auf Grund der Förderwirkung der Pumpe 18 durchströmen kann. In diesem Zustand stellt, je nach Bauart, die Pumpe 20 einen vergleichsweise großen Strömungswiderstand dar.

Die vorangehend beschriebene erfindungsgemäße Ventilanordnung ist von sehr einfachem Aufbau und weist insbesondere auch zum Bereitstellen der vorangehend beschriebenen Thermostatfunktion nur eine vergleichsweise geringe Anzahl an Bauteilen auf. Von besonderer Bedeutung ist auch, dass die erfindungsgemäße Ventilanordnung 32 in konstruktiver Hinsicht ohne Weiteres so ausgeführt werden kann, dass sie in übliche Heizsysteme in baulicher Art und Weise integriert werden kann, da sie im Wesentlichen nur die durch den Rohrabschnitt 48 bereitgestellten Leitungsabschnitte 30, 42 bzw. entsprechende Anschlussmöglichkeiten dafür sowie den durch den Rohrabschnitt 52 bereitgestellten Leitungsabschnitt 44 bzw. eine entsprechende Anschlussmöglichkeit für diesen aufweisen muss.

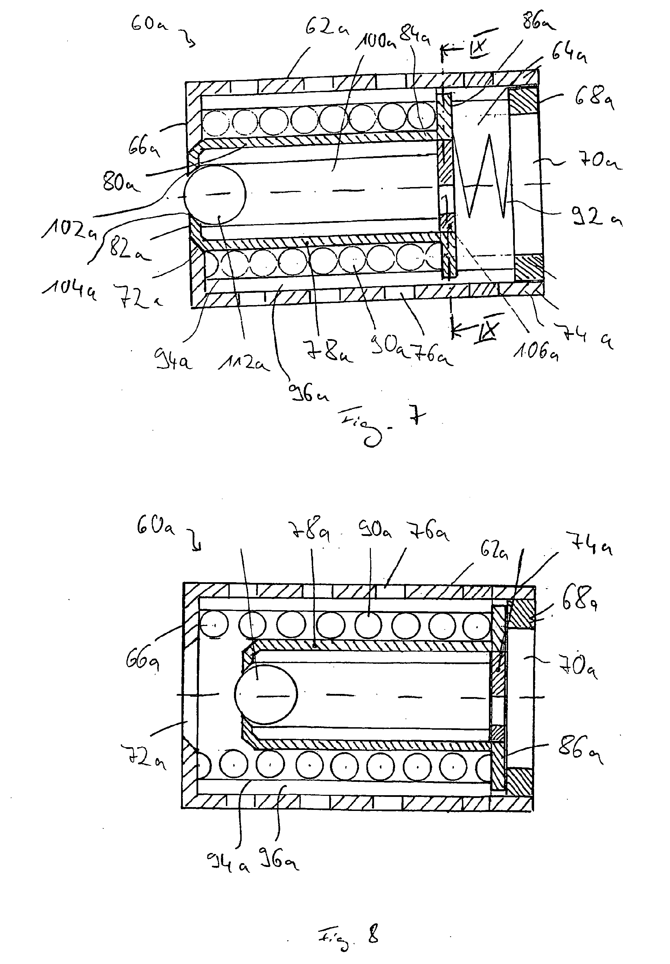

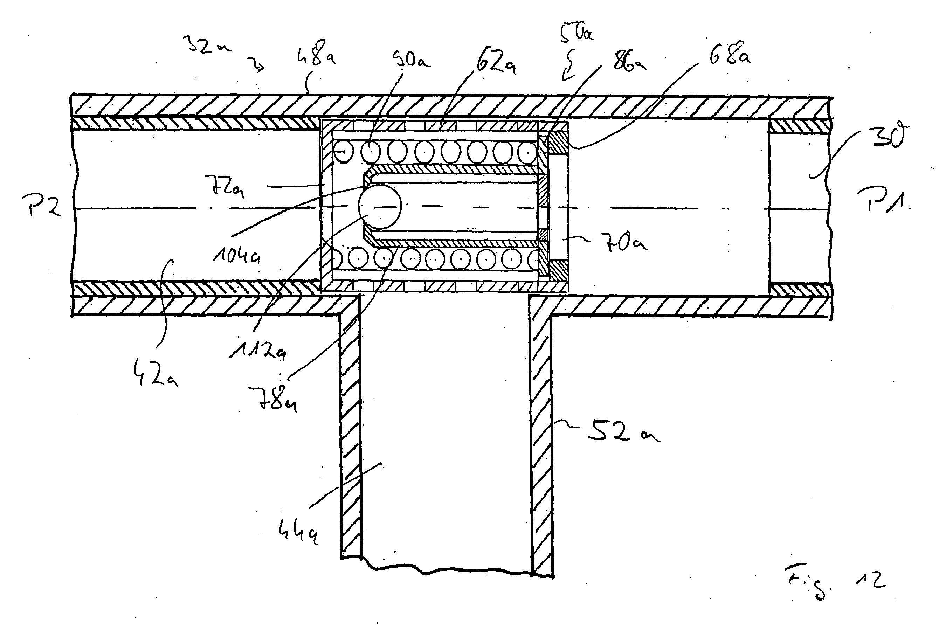

Mit Bezug auf die Figuren 7 bis 13 wird nachfolgend eine alternative Ausgestaltungsform einer erfindungsgemäßen Ventilanordnung beschrieben. Komponenten, welche vorangehend beschriebenen Komponenten hinsichtlich Aufbau bzw. Funktion entsprechen, sind mit dem gleichen Bezugszeichen unter Hinzufügung des Anhangs "a" bezeichnet.

Zunächst sei mit Bezug auf die Figuren 7 bis 10 das Ventilelement 60a dieser Ausgestaltungsform beschrieben. Man erkennt wieder das zylinderartig bzw. topfartig ausgebildete erste Ventilorgan 62a mit seiner zylindrischen Wandung 74a und dem Bondenbereich 66a. In dem Bodenbereich 66a ist wieder die Öffnung 72a ausgebildet. Andernends ist das erste Ventilorgan 62a bzw. die darin ausgebildete Ventilkammer 64a durch das Einsatzteil 68a mit der darin ausgebildeten Öffnung 70a begrenzt. In der Zylinderkammer 64a ist das zweite Ventilorgan 78a wieder unter der Krafteinwirkung des Stellelements 90a bzw. der Rückstellfeder 92a in der Richtung der Längsachse des Ventilelements 60a temperaturabhängig verschiebbar.

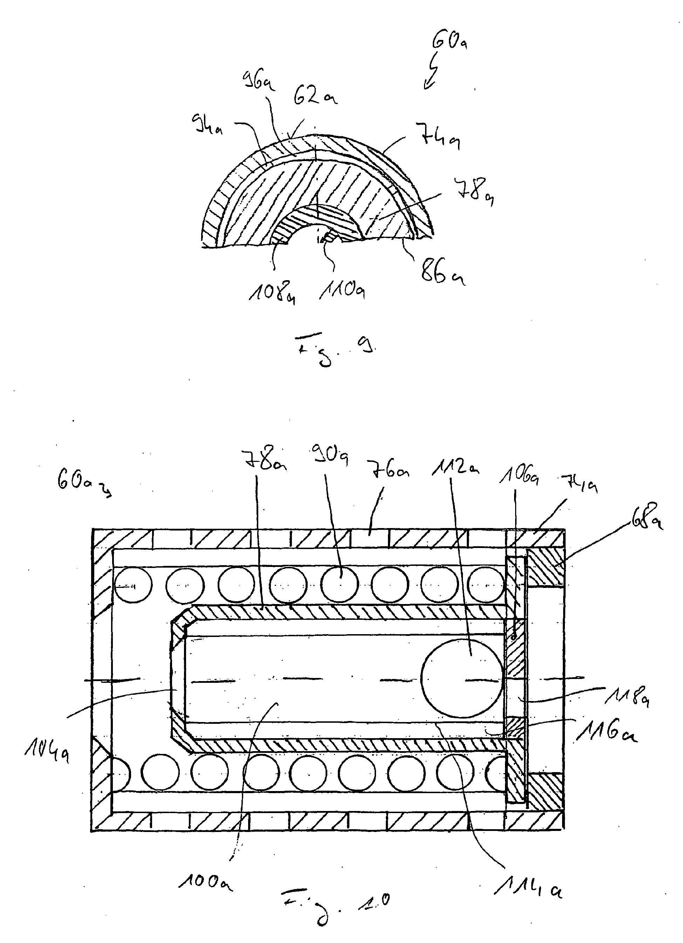

Das zweite Ventilorgan 78a ist bei dieser Ausgestaltungsform hohl ausgestaltet und weist einen Innenraum 100a auf. Dieser Innenraum 100a ist im Endbereich 82a durch eine Bodenwandung 102a begrenzt, in welcher Bodenwandung 102a wiederum eine Öffnung 104a ausgebildet ist. Im anderen Endbereich ist dieser Innenraum 100a durch ein Einsatzteil 106a begrenzt, das einen ringförmigen Einpassabschnitt 108a und darin eine sternartige Halteanordnung 110a aufweist. Mit dem Einpassabschnitt 108a ist das Einsatzteil 106a in den flanschartigen Endbereich 86a des zweiten Ventilorgans 78a fest eingesetzt. Weiter ist in dem Innenraum 100a ein kugelartig ausgebildetes drittes Ventilorgan 112a aufgenommen. Dieses kann sich entlang des Schaftabschnitts 80a des Ventilorgans 78a bewegen. In der in Fig. 7 erkennbaren Bewegungsendstellung verschließt dieses Ventilorgan 112a die Öffnung 104a beispielsweise vollständig. In der in Fig. 10 erkennbaren zweiten Bewegungsendstellung liegt das kugelartige Ventilorgan 112a an dem Einsatzteil 106a an, ist jedoch am Herausbewegen aus dem Innenraum 100a gehindert. Gleichwohl ist durch mehrere auch das kugelartige Ventilorgan 112a in seiner Bewegung führende und an der Innenseite des Schaftabschnitts 80a in dessen Längsrichtung sich erstreckende Vorsprünge 114a bzw. dazwischen gebildete Aussparungen 116a bei der in Fig. 10 dargestellten Endstellung des Ventilorgans 112a dafür gesorgt, dass ein Fluiddurchtritt durch das zweite Ventilorgan 78a möglich ist, d.h., eine Strömungsverbindung von der Öffnung 104a über den Innenraum 100a durch eine Öffnungsanordnung 118a im Einsatzteil 106a hindurch geschaffen ist.

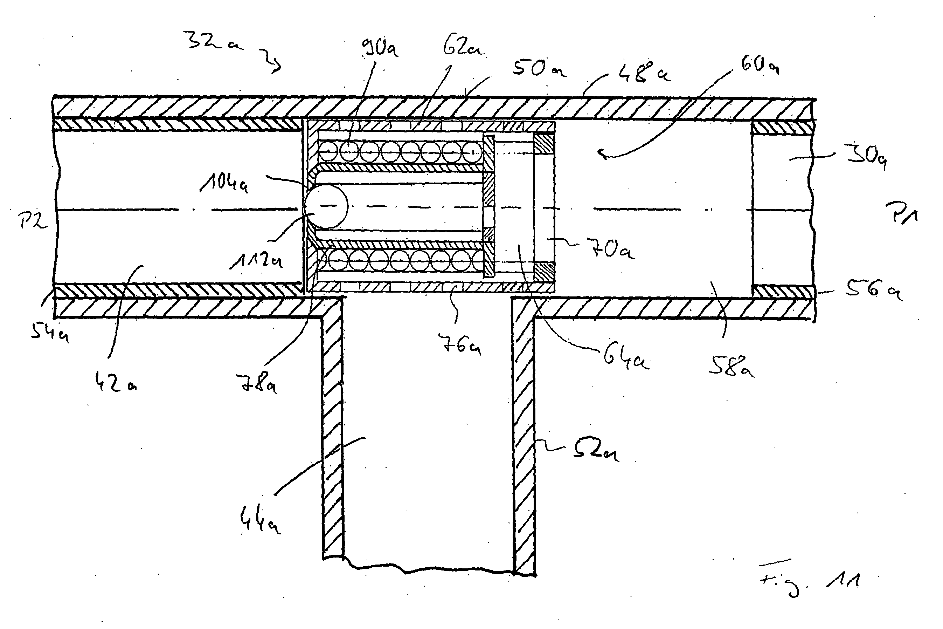

Die Funktionsweise einer mit einem derartigen Ventilorgan 60a ausgestatteten Ventilanordnung 32a wird nachfolgend mit Bezug auf die Figuren 11 bis 13 beschrieben. In Fig. 11 ist der vorangehend mit Bezug auf die erste Ausgestaltungsform bereits beschriebene und in der Fig. 4 erkennbare Betriebszustand dargestellt. Das erste Ventilorgan 62a bzw. das Ventilelement 60a ist in der ersten Verbindungsstellung. Die Öffnung 72a ist durch das zweite Ventilorgan 78a abgeschlossen, während die Öffnung 70a freigegeben ist und somit über die Ventilanordnung 64a eine Verbindung zu den Öffnungen 76a geschaffen ist. Somit kann unter der Förderwirkung der Pumpe 20 des Heizgeräts 14 das in den Leitungabschnitt 30a eingetretene. Fluid das erste Ventilorgan 62a durchströmen und in den Leitungsabschnitt 44a eintreten. Dieser Kreislauf, der letztendlich nicht zur Erwärmung irgendwelcher Fahrzeugsystembereiche beiträgt, dient zur Sensierung der Temperatur des ansonsten in Richtung Wärmetauscher zirkulierenden Heizfluids, da auch bei dieser Ausgestaltungsform in der ersten Vebindungsstellung und bei in der ersten Überbrückungsstellung positioniertem Ventilorgan 78a das Stellelement 90a in im Wesentlichen von dem über den Leitungsabschnitt 30a herangeförderten Fluid umströmt wird und somit dessen Temperatur sensiert.

Weiterhin erkennt man in Fig. 11, dass auf Grund der Tatsache, dass der Druck P1 im Leitungsabschnitt 30a den Druck P2 im Leitungsabschnitt 42a übersteigt, das dritte Ventilorgan 112a auch so positioniert ist, dass es die Öffnung 104a im zweiten Ventilorgan 78a abschließt, so dass eine Durchströmbarkeit des zweiten Ventilorgans 78a hier nicht gegeben ist.

Bei Anstieg der Temperatur des Heizfluids findet dann bei weiterhin in der ersten Verbindungsstellung bleibendem ersten Ventilorgan 62a eine Verschiebung des zweiten Ventilorgans 78a in Richtung zu seiner zweiten Überbrückungsstellung statt. In diesem Zustand ist dann die Öffnung 72a im ersten Ventilorgan 60a freigegeben, so dass nunmehr eine Strömungsverbindung zwischen dem Leitungsabschnitt 42a und dem Leitungsabschnitt 44a realisiert ist. Da unter der Krafteinwirkung des Stellelements 90a das zweite Ventilorgan 78a mit seinem Flanschbereich 86a bei dieser Ausgestaltungsvariante am Einsatzteil 68a aufsitzt, ist die Öffnung 70a im Einsatzteil 68a blockiert, auch deshalb, da weiterhin durch die Druckdifferenz P1 > P2 das dritte Ventilorgan 112a die ihm zugeordnete Öffnung 104a im zweiten Ventilorgan 78a sperrt und dieses somit gegen Durchströmung blockiert. D.h. der vorangehend bei der ersten Ausgestaltungsform in diesem Zustand noch mögliche geringe Strömungsanteil vom Leitungsabschnitt 30 in den Leitungsabschnitt 44 bei in der zweiten Überbrückungsstellung positioniertem zweiten Ventilorgan ist hier nicht vorhanden. Die Folge davon ist, dass das Stellelement 90a hier ausschließlich von dem aus dem Leitungsabschnitt 42a heranströmenden Heizfluid umströmt wird und somit verstärkt dessen Temperatur sensiert.

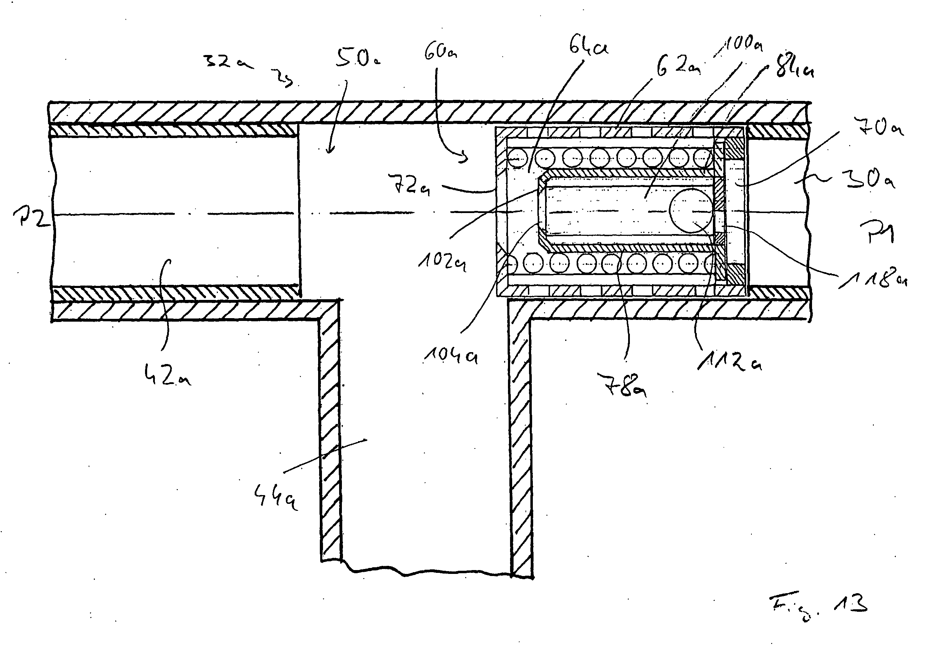

Wird dann zusätzlich oder als alleiniges Förderorgan die in der Fig. 1 erkennbare Pumpe 18 in Betrieb gesetzt, so wird wieder der Zustand auftreten, in dem der Druck P2 den Druck P1 übersteigt. Die Folge davon ist, dass, wie in Fig. 13 erkennbar, das erste Ventilorgan 62a bzw. das Ventilelement 60 in seine zweite Verbindungsstellung gelangt, in welchem es die Einmündung des Leitungsabschnitts 44a im Wesentlichen nicht mehr überdeckt. Es ist dann eine Maximalströmungsverbindung zwischen dem Leitungsabschnitt 42a und dem Leitungsabschnitt 44a realisiert.

Auf Grund der Tatsache, dass der Druck P2 nunmehr den Druck P1 übersteigt, ist in diesem Zustand auch keine Kraft mehr vorhanden, die das dritte Ventilorgan 112a auf seinem Ventilsitz, nämlich dem Bodenbereich 102a. D.h., dass dritte Ventilorgan 112a wird sich in den Endbereich 84a des ersten Ventilorgans 78a bewegen und die Öffnung 104a freigeben. Die Folge davon ist, dass nunmehr das unter Druck aus dem Leitungsabschnitt 42a ausströmende Heizfluid durch die Öffnung 72a in die Ventilkammer 64a gelangen wird, durch die Öffnung 104a in den Innenraum 100a des zweiten Ventilorgans gelangen wird und durch die Öffnungsanordnung 118a und die Öffnung 70a in den Leitungsabschnitt 30 eintreten wird. Somit ist auch bei dieser Ausgestaltungsform dafür gesorgt, dass der Strömungswiderstand für das im Bereich des Antriebsaggregats in diesem Betriebszustand erwärmte Heizfluid beim Fördern desselben in Richtung Wärmetauscher möglichst gering ist.

Es sei darauf hingewiesen, dass selbstverständlich auch bei der Ausgestaltungsform gemäß Fig. 7 bis 13 die vorangehend beschriebenen Abstandshalter vorgesehen sein können, so dass durch Bereitstellen eines zusätzlichen Strömungsweges dieser vorangehend angesprochene Strömungswiderstand weiter verringert werden kann. Ansonsten entspricht die vorangehend beschriebene zweite Ausgestaltungsform insbesondere auch hinsichtlich der Schaltcharakteristik des temperaturempfindlich wirksamen Stellelements der ersten Ausgestaltungsform.

Selbstverständlich können bei beiden Ausgestaltungsformen - Änderungen vorgenommen werden, ohne vom Prinzip der vorliegenden Erfindung abzuweichen. So ist es beispielsweise möglich, dass dann, wenn das zweite Ventilorgan in seiner ersten Überbrückungsstellung ist, also beispielsweise in dem in Fig. 4 gezeigten Zustand oder dem in Fig. 11 gezeigten Zustand ist, die dann an sich verschlossene Öffnung im Bodenbereich des ersten Ventilorgans nicht vollständig abgeschlossen ist, sondern immer noch eine Minimalströmung möglich ist, so dass zumindest ein geringer Fluidaustausch über das Antriebsaggregat hinweg realisierbar ist. Weiter sei darauf hingewiesen, dass bei den vorangehend beschriebenen Ventilelementen die verschiedenen Aufbauteile in sehr kostengünstiger Art und Weise hergestellt werden können. Diese können als Kunststoffbauteile hergestellt werden, die entweder durch Drehbearbeitung oder bereits bei der Fertigung mit der gewünschten Gestalt bereitgestellt werden können.

## Patentansprüche

1. Ventilanordnung, insbesondere zur Einstellung der Heizmittel-/Kühlmittelströmung in einem Kraftfahrzeug, umfassend ein erstes Ventilorgan (62; 62a), das in Abhängigkeit von einer zwischen einer ersten Leitung (30; 30a) und einer zweiten Leitung (42; 42a) vorherrschenden Druckdifferenz zwischen einer ersten Verbindungsstellung und einer zweiten Verbindungsstellung verstellbar ist, so wie ein zweites Ventilorgan (78; 78a), das temperaturabhängig die Strömung verändert,
**dadurch gekennzeichnet, dass** zweite Ventilorgan die Durchströmbarkeit des ersten Ventilorgans verändert, und wobei eine Aktuatoranordnung (90; 90a) vorgesehen ist, durch welche temperaturabhängig das zweite Ventilorgan (78; 78a) zwischen einer ersten Überbrückungsstellung und einer zweiten Überbrückungsstellung verstellbar ist, wobei
- dann, wenn der Druck in der ersten Leitung (30; 30a) höher ist, als der Druck in der zweiten Leitung (42; 42a), das erste Ventilorgan (62; 62a) in der ersten Verbindungsstellung ist oder in die erste Verbindungsstellung bringbar ist, wobei bei in der ersten Stellung positioniertem ersten Ventilorgan (62; 62a) das zweiteVentilorgan (78; 78a) vermittels der Aktuatoranordnung in Abhängigkeit von der Temperatur zwischen der ersten Überbrückungsstellung, in welcher eine Strömungsverbindung zwischen der ersten Leitung (30; 30a) und einer dritten Leitung (44; 44a) vorgesehen ist, während zwischen der zweiten Leitung (42; 42a) und der dritten Leitung (44; 44a) keine oder eine Minimalströmungsverbindung vorgesehen ist, und der zweiten Überbrückungsstellung verstellbar ist, in welcher eine Strömungsverbindung zwischen der zweiten Leitung (42; 42a) und der dritten Leitung (44; 44a) vorgesehen ist, während zwischen der ersten Leitung (30; 30a) und der dritten Leitung (44; 44a) keine Strömungsverbindung oder eine Minimalströmungsverbindung vorgesehen ist, und
- dann, wenn der Druck in der zweiten Leitung (42; 42a) höher ist, als der Druck in der ersten Leitung (30; 30a), das erste Ventilorgan (62; 62a) in der zweiten Verbindungsstellung ist oder in die zweite Verbindungsstellung bringbar ist, in welcher eine Strömungsverbindung zwischen der zweiten Leitung (42; 42a) und der dritten Leitung (44; 44a) vorgesehen ist.

2. Ventilanordnung nach Anspruch 1,
**dadurch gekennzeichnet, dass** in dem ersten Ventilorgan (62; 62a) eine Ventilkammer (64; 64a) gebildet ist, dass in dem ersten Ventilorgan (62; 62a) eine erste Öffnungsanordnung (70; 70a) vorgesehen ist, über welche die Ventilkammer (64; 64a) in Verbindung mit einer ersten Leitung (30; 30a) bringbar ist, eine zweite Öffnungsanordnung (72; 72a) vorgesehen ist, über welche die Ventilkammer (64; 64a) in Verbindung mit einer zweiten Leitung (42; 42a) bringbar ist, und eine dritte Öffnungsanordnung (76; 76a) vorgesehen ist, über welche die Ventilkammer (64; 64a) in Verbindung mit einer dritten Leitung (44; 44a) bringbar ist, wobei das zweite Ventilorgan (78; 78a) in der ersten Überbrückungsstellung eine Strömungsverbindung von der ersten Öffnungsanordnung (70; 70a) zur dritten Öffnungsanordnung (76; 76a) über die Ventilkammer (64; 64a) vorsieht, während über die zweite Öffnungsanordnung (72; 72a) keine Strömungsverbindung oder eine Minimalströmungsverbindung zur Ventilkammer (64; 64a) vorgesehen ist, und in der zweiten Überbrückungsstellung eine Strömungsverbindung von der zweiten Öffnungsanordnung (72; 72a) zur dritten Öffnungsanordnung (76; 76a) über die Ventilkammer (64; 64a) vorsieht, während zumindest dann, wenn das erste Ventilorgan (62; 62a) in einer ersten Verbindungsstellung ist, über die erste Öffnungsanordnung (70; 70a) keine Strömungsverbindung oder eine Minimalströmungsverbindung zur Ventilkammer (64; 64a) vorgesehen ist.

3. Ventilanordnung nach Anspruch 1 oder 2,
**dadurch gekennzeichnet, dass** die Aktuatoranordnung (90; 90a) ein temperaturabhängig wirksames Stellelement (90; 90a) umfasst, durch welches das zweite Ventilorgan (78; 78a) bezüglich des ersten Ventilorgans (62; 62a) verstellbar ist.

4. Ventilanordnung nach Anspruch 2 oder Anspruch 3, sofern auf Anspruch 2 rückbezogen,
**dadurch gekennzeichnet, dass** das zweite Ventilorgan (78; 78a) in der Ventilkammer des ersten Ventilorgans (62; 62a) angeordnet ist und durch die Aktuatoranordnung (90; 90a) in der Ventikammer (64; 64a) verstellbar ist.

5. Ventilanordnung nach einem der Ansprüche 3 oder 4,
**dadurch gekennzeichnet, dass** das zweite Ventilorgan (78; 78a) durch das Stellelement (90; 90a) temperaturabhängig gegen die Wirkung eines Rückstellelements (92; 92a) verschiebbar ist.

6. Ventilanordnung nach einem der Ansprüche 3 bis 5,
**dadurch gekennzeichnet, dass** das Stellelement (90; 90a) ein temperaturabhängig expandierendes/kontrahierendes Element (90; 90a) ist, das durch seine Extraktion/Kontraktion eine Verschiebung des zweiten Ventilorgans (78; 78a) bezüglich des ersten Ventilorgans (62; 62a) auslöst.

7. Ventilanordnung nach Anspruch 2 oder einem der Ansprüche 3 bis 6, sofern auf Anspruch 2 rückbezogen,
**dadurch gekennzeichnet, dass** ein drittes Ventilorgan (112a) vorgesehen ist, das in Abhängigkeit von einer zwischen der ersten Leitung (30a) und der zweiten Leitung (42a) vorherrschenden Druckdifferenz die Durchströmbarkeit des zweiten Ventilorgans (78a) verändert.

8. Ventilanordnung nach Anspruch 7,
**dadurch gekennzeichnet, dass** dann, wenn der Druck in der ersten Leitung (30a) höher ist, als der Druck in der zweiten Leitung (42a), das dritte Ventilorgan (112a) das zweite Ventilorgan (78a) gegen Durchströmung sperrt, und dann, wenn der Druck in der zweiten Leitung (42a) höher ist, als der Druck in der ersten Leitung (30a), das dritte Ventilorgan (112a) das zweite Ventilorgan (78a) zur Durchströmung freigibt.

9. Ventilanordnung nach einem der Ansprüche 1 bis 8,
**dadurch gekennzeichnet, dass** bei niedrigerer Temperatur das zweite Ventilorgan (78; 78a) in seiner ersten Überbrückungsstellung ist und dass bei höherer Temperatur das zweite Ventilorgan (78; 78a) in seiner zweiten Überbrückungsstellung ist.

10. Ventilanordnung nach Anspruch 3 oder einem der Ansprüche 4 bis 9, sofern auf Anspruch 3 rückbezogen,
**dadurch gekennzeichnet, dass** bei in der ersten Verbindungsstellung positioniertem ersten Ventilorgan (62; 62a) und in der oder im Bereich der ersten Überbrückungsstellung positioniertem zweiten Ventilorgan (78; 78a) das temperaturabhängig wirksame Stellelement (90; 90a) im Wesentlichen in thermischem Kontakt mit im Bereich der ersten Leitung (30; 30a) strömendem Fluid ist und dass bei in der ersten Verbindungsstellung positioniertem ersten Ventilorgan (62; 62a) und in der oder im Bereich der zweiten Überbrückungsstellung positioniertem zweiten Ventilorgan (78; 78a) das temperaturabhängig wirksame Stellelement (90; 90a) im Wesentlichen in thermischem Kontakt mit im Bereich der zweiten Leitung (42; 42a) strömendem Fluid ist.

11. Fahrzeugheizsystem, umfassend:
- eine erste Wärmequelle (12), welche von einem Heizfluid zur Erwärmung desselben durchströmbar ist, wobei die erste Wärmequelle (12) im Wesentlichen ein Fahrzeugantriebsaggregat (12) umfasst,
- eine zweite Wärmequelle (14), welche zur Erwärmung des Heizfluids von diesem durchströmbar ist, wobei die zweite Wärmequelle (14) im Wesentlichen ein Zusatzheizgerät (14) umfasst,
- eine Wärmetauscheranordnung (24), welcher das von der ersten Wärmequelle (12) oder/und von der zweiten Wärmequelle (14)erwärmte Fluid zuführbar ist,
**dadurch gekennzeichnet, dass** den Fahrzeugheizsystem zusätzlich
- eine Ventilanordnung (60; 60a) nach einem der vorangehenden Ansprüche umfasst, welche bei zur Erwärmung des Heizfluids betriebener zweiter Wärmequelle (14) eine Heizfluidströmung von der zweiten Wärmequelle (14) zur Wärmetauscheranordnung (24) und von der Wärmetauscheranordnung (24) zur zweiten Wärmequelle (14) ermöglicht, während eine Durchströmung der ersten Wärmequelle (12) im Wesentlichen unterbunden ist, wenn die Temperatur des die zweite Wärmequelle (14) verlassenden Heizfluids in einem niedrigeren Bereich ist, und welche bei zur Erwärmung des Heizfluids betriebener zweiter Wärmequelle (14) eine Durchströmung der ersten Wärmequelle (12) mit dem Heizfluid ermöglicht, wenn die Temperatur des die zweite Wärmequelle (14) verlassenden Heizfluids in einem höheren Bereich ist.

12. Fahrzeugheizsystem nach Anspruch 11,
**dadurch gekennzeichnet, dass** die Ventilanordnung (60; 60a) dann, wenn die Temperatur des die zweite Wärmequelle (14) verlassenden Heizfluids in einem höheren Bereich ist und eine Durchströmung der ersten Wärmequelle (12) mit dem Fluid ermöglicht ist, diese Durchströmung drosselt oder unterbindet, wenn die Temperatur des von der ersten Wärmequelle (14) zur Ventilanordnung (60; 60a) strömenden Heizfluids in einem niedrigeren Bereich ist.

## Claims

1. Valve arrangement, in particular for adjusting the heating/cooling agent flow in a vehicle, comprising, a first valve element (62; 62a) adjustable between a first connecting position and a second connecting position depending on an existing pressure difference between a first conduit (30; 30a) and a second conduit (42; 42a), as well as a second valve element (78; 78a) changing the flow depending on temperature,
**characterized in** the second valve element changing the flowability through the first valve element and
an actuator arrangement (90; 90a) being provided by which the second valve element (78; 78a) is adjustable between a first bridging position and a second bridging position depending on temperature, wherein
- when the pressure in the first conduit (30; 30a) is higher than the pressure in the second conduit (42; 42a) the first valve element (62; 62a) is in the first connecting position or is adjustable to the first connecting position, wherein, when the first valve element (62; 62a) is placed in the first position, the second valve element (78; 78a) is, by means of the actuator arrangement and depending on the temperature, adjustable between the first bridging position, where a flow connection is provided between the first conduit (30; 30a) and a third conduit (44; 44a), while no flow connection or a minimum flow connection is provided between the second conduit (42; 42a) and the third conduit (44; 44a), and the second bridging position, where a flow connection is provided between the second conduit (42; 42a) and the third conduit (44; 44a), while no flow connection or a minimum flow connection is provided between the first conduit (30; 30a) and the third conduit (44; 44a), and
- when the pressure in the second conduit (42; 42a) is higher than the pressure in the first conduit (30; 30a) the first valve element (62; 62a) is in the second connecting position or is adjustable to the second connecting position, wherein a flow connection is provided between the second conduit (42; 42a) and the third conduit (44; 44a).

2. Valve arrangement according to claim 1,
**characterized in** a valve chamber (64; 64a) being formed in the first valve element (62; 62a), and a first opening arrangement (70; 70a) being provided in the first valve element (62; 62a), whereby the valve chamber (64; 64a) may be brought into communication with a first conduit (30; 30a), and a second opening arrangement (72; 72a) being provided, whereby the valve chamber (64; 64a) may be brought into communication with a second conduit (42; 42a), and a third opening arrangement (76; 76a) being provided, whereby the valve chamber (64; 64a) may be brought into communication with a third conduit (44; 44a), the second valve element (78; 78a) providing a flow connection from the first opening arrangement (70; 70a) to the third opening arrangement (76; 76a) via the valve chamber (64; 64a) when in the first bridging position, while via the second opening arrangement (72; 72a) there is no flow connection or a minimum flow connection towards the valve chamber (64; 64a); and providing a flow connection from the second opening arrangement (72; 72a) to the third opening arrangement (76; 76a) via the valve chamber (64; 64a) when in the second bridging position, while via the first opening arrangement (70; 70a) there is no flow connection or a minimum flow connection towards the valve chamber (64; 64a), at least when the first valve element (62; 62a) is in a first bridging position.

3. Valve arrangement according to claim 1 or 2,
**characterized in** the actuator arrangement (90; 90a) comprising a temperature dependent adjustment element (90; 90a), whereby the second valve element (78; 78a) is adjustable in relation to the first valve element (62; 62a).

4. Valve arrangement according to claim 2 or claim 3, if dependent on claim 2,
**characterized in** the second valve element (78; 78a) being arranged in the valve chamber of the first valve element (62; 62a) and being adjustable by the actuator arrangement (90; 90a) in the valve chamber (64; 64a).

5. Valve arrangement according to one of claims 3 or 4,
**characterized in** the second valve element (78; 78a) being by means of the adjustment element (90; 90a) and depending on the temperature, slidable against the effect of a return element (92; 92a).

6. Valve arrangement according to one of claims 3 to 5,
**characterized in** the adjustment element (90; 90a) being a temperature-dependent expanding/contracting element (90; 90a), causing by its expansion/contraction a displacement of the second valve element (78; 78a) in relation to the first valve element (62; 62a).

7. Valve arrangement according to claim 2 or one of claims 3 to 6, if dependent on claim 2,
**characterized in** a third valve element (112a) being provided, which depending on a pressure difference prevailing between the first conduit (30a) and the second conduit (42a), modifies flow through the second valve element (78a).

8. Valve arrangement according to claim 7,
**characterized in that**, when the pressure in the first conduit (30a) is higher than the pressure in the second conduit (42a), the third valve element (112a) blocks the second valve element (78a) against through flow, and when the pressure in the second conduit (42a) is higher than the pressure in the first conduit (30a), the third valve element (112a) releases flow through the second valve element (78a).

9. Valve arrangement according to one of claims 1 to 8,
**characterized in that** at lower temperatures the second valve element (78; 78a) is in its first bridging position and at higher temperatures the second valve element (78; 78a) is in its second bridging position.

10. Valve arrangement according to claim 3 or one of claims 4 to 9, if dependent on claim 3,
**characterized in that**, when the first valve element (62; 62a) is positioned in the first bridging position and when the second valve element (78; 78a) is positioned in or in the range of the first bridging position, the temperature-dependent adjustment element (90; 90a) is substantially in thermal contact with fluid flowing in the first conduit (30; 30a) and that, when the first valve element (62; 62a) is positioned in the first bridging position and the second valve element (78; 78a) is positioned in or in the range of the second bridging position, the temperature-dependent adjustment element (90; 90a) is substantially in thermal contact with fluid flowing in the second conduit (42; 42a).

11. Vehicle heating system, comprising:
- a first source of heat (12) wherein heating fluid for heating the latter may flow, the first source of heat (12) substantially comprising a vehicle engine (12),
- a second source of heat (14) wherein heating fluid may flow for being heated, the second source of heat (14) substantially comprising an auxiliary heating device (14),
- a heat exchanger arrangement (24) into which the fluid heated by the first source of heat (12) or/and the second source of heat (14) may be fed, **characterized by** the vehicle heating device additionally comprising a valve arrangement (60; 60a) according to one of the preceding claims, which, when the second source of heat (14) is operated for heating the heating fluid, allows a heating fluid to flow from the second source of heat (14) to the heat exchanger arrangement (24) and from the heat exchanger arrangement (24) to the second source of heat (14), while a flow through the first source of heat (12) is substantially prevented, when the temperature of the heating fluid leaving the second source of heat (14) is in a lower range, and which, when the second source of heat (14) is operated for heating the heating fluid, allows the heating fluid to flow through the first source of heat (12), when the temperature of the heating fluid leaving the second source of heat (14) is in a higher range.

12. Vehicle heating system according to claim 11,
**characterized in that**, when the temperature of the heating fluid leaving the second source of heat (14) is in a higher range allowing fluid to flow through the first source of heat (12), the valve arrangement (60; 60a) reduces or prevents this flow , when the temperature of the heating fluid flowing from the first source of heat (12) to the valve arrangement (60; 60a) is in a lower range.

## Revendications

1. Arrangement de soupape, en particulier pour régler le courant du moyen de chauffage/refroidissement dans un véhicule, comprenant un premier élément de soupape (62 ; 62a) qui, en fonction d'une différence de pression entre un premier tuyau (30 ; 30a) et un deuxième tuyau (42 ; 42a), est réglable entre une première position de communication et une deuxième position de communication, ainsi qu'un deuxième élément de soupape (78 ; 78a) qui, en fonction de la température, modifie le courant , **caractérisé par** le deuxième élément de soupape modifiant le courant à travers le premier élément de soupape,
un arrangement d'actuateur (90 ; 90a) étant prévu, par lequel le deuxième élément de soupape (78 ; 78a) est réglable en fonction de la température, entre une première position de pontage et une deuxième position de pontage,
- où, lorsque la pression dans le premier tuyau (30 ; 30a) dépasse la pression dans le deuxième tuyau (42 ; 42a), le premier élément de soupape (62 ; 62a) se trouve dans la première position de communication ou peut être amené dans la première position de communication ; le premier élément de soupape (62 ; 62a) se trouvant dans la première position, le deuxième élément de soupape (78 ; 78a) étant alors, en fonction de la température et par l'arrangement d'actuateur, variable entre la première position de pontage, où une communication de courant est prévue entre le premier tuyau (30 ; 30a) et un troisième tuyau (44 ; 44a), tandis qu'il n'y a pas de communication de courant ou une communication de courant minimale entre le deuxième tuyau (42 ; 42a) et le troisième tuyau (44 ; 44a), et la deuxième position de pontage, où une communication de courant est prévue entre le deuxième tuyau (42 ; 42a) et le troisième tuyau (44 ; 44a) tandis qu'il n'a pas de communication de courant ou une communication de courant minimale entre le premier tuyau (30 ; 30a) et le troisième tuyau (44 ; 44a), et
- où, lorsque la pression dans le deuxième tuyau (42 ; 42a) dépasse la pression dans le premier tuyau (30 ; 30a), le premier élément de soupape (62 ; 62a) se trouve dans la deuxième position de communication ou peut être amené dans la deuxième position de communication, où une communication de courant est prévue entre le deuxième tuyau (42 ; 42a) et le troisième tuyau (44 ; 44a).

2. Arrangement de soupape selon la revendication 1,
**caractérisé par** une chambre de soupape (64 ; 64a) étant formée dans le premier élément de soupape (62 ; 62a), et par un premier arrangement d'orifice (70 ; 70a) étant prévu dans le premier élément de soupape (62 ; 62a) par lequel la chambre de soupape (64 ; 64a) peut être amenée en communication avec un premier tuyau (30 ; 30a), et par un deuxième arrangement d'orifice (72 ; 72a) étant prévu, par lequel la chambre de soupape (64 ; 64a) peut être amenée en communication avec un deuxième tuyau (42 ; 42a) et par un troisième arrangement d'orifice (76 ; 76a) étant prévu, par lequel la chambre de soupape (64 ; 64a) peut être amenée en communication avec un troisième tuyau (44 ; 44a), le deuxième élément de soupape (78 ; 78a) prévoyant dans la première position de pontage une communication de courant du premier arrangement d'orifice (70 ; 70a) au troisième arrangement d'orifice (76 ; 76a) par la chambre de soupape (64 ; 64a) tandis qu'il n'y a pas de communication de courant ou une communication de courant minimale à la chambre de soupape (64 ; 64a) par le deuxième arrangement d'orifice (72 ; 72a), et prévoyant dans la deuxième position de pontage une communication de courant du deuxième arrangement d'orifice (72 ; 72a) au troisième arrangement d'orifice (76 ; 76a) par la chambre de soupape (64 ; 64a), tandis que, au moins lorsque le premier élément de soupape (62 ; 62a) se trouve dans une première position de connexion, il n'y a pas de communication de courant ou une communication de courant minimale à la chambre de soupape (64 ; 64a).

3. Arrangement de soupape selon la revendication 1 ou 2,
**caractérisé par** l'arrangement d'actuateur (90 ; 90a) comprenant un élément d'actuateur (90 ; 90a), efficace en fonction de la température, par lequel le deuxième élément de soupape (78 ; 78a) est réglable par rapport au premier élément de soupape (62 ; 62a).

4. Arrangement de soupape selon la revendication 1 ou la revendication 3, si dépendante de la revendication 2,
**caractérisé par** le deuxième élément de soupape (78 ; 78a) étant placé dans la chambre de soupape du premier élément de soupape (62 ; 62a) et étant réglable par l'arrangement d'actuateur (90 ; 90a) dans la chambre de soupape (64 ; 64a).

5. Arrangement de soupape selon une des revendications 3 ou 4, **caractérisé par** le deuxième élément de soupape (78 ; 78a) pouvant être déplacé par l'élément d'actuateur (90 ; 90a) contre l'effet de l'élément de repositionnement (92 ; 92a) en fonction de la température.

6. Arrangement de soupape selon une des revendications 3 à 5,
**caractérisé par** l'élément d'actuateur (90 ; 90a) étant un élément (90 ; 90a) extensible/contractile en fonction de la température, qui par son extension/contraction peut causer un déplacement du deuxième élément de soupape (78 ; 78a) relatif au premier élément de soupape (62 ; 62a).

7. Arrangement de soupape selon la revendication 2 ou une des revendications 3 à 6, si dépendantes de la revendication 2,
**caractérisé par** un troisième élément de soupape (112a) étant prévu, qui en fonction d'une différence de pression entre le premier tuyau (30a) et le deuxième tuyau (42a) modifie le courant à travers le deuxième élément de soupape (78a).

8. Arrangement de soupape selon la revendication 7,
**caractérisé en ce que** lorsque la pression dans le premier tuyau (30a) est plus grande que la pression dans le deuxième tuyau (42a), le troisième élément de soupape (112a) bloque le courant à travers le deuxième élément de soupape (78a), et lorsque la pression dans le deuxième tuyau (42a) est plus grande que la pression dans le premier tuyau (30a), le troisième élément de soupape (112a) débloque le courant à travers le deuxième élément de soupape (78a).

9. Arrangement de soupape selon une des revendications 1 à 8,
**caractérisé en ce que** lorsque la température est basse le deuxième élément de soupape (78 ; 78a) se trouve dans sa première position de pontage et lorsque la température est plus élevée le deuxième élément de soupape (78 ; 78a) se trouve dans sa deuxième position de pontage.

10. Arrangement de soupape selon la revendication 3 ou une des revendications 4 à 9, si dépendante de la revendication 3,
**caractérisé en ce que**, lorsque le premier élément de soupape (62 ; 62a) se trouve dans la première position de communication et lorsque le deuxième élément de soupape (78 ; 78a) se trouve dans la première position de pontage l'élément d'actuateur (90 ; 90a), efficace en fonction de la température, est essentiellement en contact thermique avec du fluide circulant dans le premier tuyau (30 ; 30a) et **en ce que**, lorsque le premier élément de soupape (62 ; 62a) se trouve dans la première position de communication et lorsque le deuxième élément de soupape (78 ; 78a) se trouve dans la ou dans l'étendue de la deuxième position de pontage l'élément d'actuateur (90 ; 90a), efficace en fonction de la température, est essentiellement en contact thermique avec du fluide circulant dans le deuxième tuyau (42 ; 42a).

11. Dispositif de chauffage d'un véhicule, comprenant :
- une première source de chaleur (12), à travers laquelle peut circuler du fluide de chauffage pour chauffer cette dernière, la première source de chaleur (12) comprenant essentiellement un moteur d'un véhicule,
- une deuxième source de chaleur (14), à travers laquelle peut circuler du fluide de chauffage pour chauffer cette dernière, la deuxième source de chaleur (14) comprenant essentiellement und dispositif ce chauffage supplémentaire,
- un arrangement d'échangeur de chaleur (24) pouvant être alimenté en fluide chauffé par la première source de chaleur (12) ou/et la deuxième source de chaleur (14),
**caractérisé par** le système de chauffage de véhicule comprenant en outre un arrangement de soupape (60 ; 60a) selon une des revendications précédentes, qui en cas d'une deuxième source de chaleur (14), opérée pour chauffer le fluide de chauffage, permet un flux de fluide de chauffage de la deuxième source de chaleur (14) vers l'arrangement d'échangeur de chaleur (24) et de l'arrangement d'échangeur de chaleur (24) vers la deuxième source de chaleur (14); tandis qu'un flux à travers la première source de chaleur (12) est essentiellement empêché, lorsque la température du fluide de chauffage quittant la deuxième source de chaleur (14) est plutôt basse, et qui en cas d'une deuxième source de chaleur (14) opérée pour chauffer le fluide de chauffage, permet un flux de fluide de chauffage à travers la première source de chaleur lorsque la température du fluide de chauffage quittant la deuxième source de chaleur (14) est plutôt élevée.

12. Dispositif de chauffage d'un véhicule selon la revendication 11, **caractérisé en ce que**, lorsque la température du fluide de chauffage quittant la deuxième source de chaleur (14) est plutôt élevée et lorsqu'un flux de fluide de chauffage à travers la première source de chaleur (12) est possible, l'arrangement de soupape (60 ; 60a) réduit ou empêche ce flux lorsque la température du fluide de chauffage circulant de la première source de chaleur (12) vers l'arrangement de soupape (60 ; 60a) est plutôt basse.
